# EUROPÄISCHE PATENTSCHRIFT

(11) **EP 1 881 650 B1**
(45) Veröffentlichungstag und Bekanntmachung des Hinweises auf die Patenterteilung: **29.07.2009**
(21) Anmeldenummer: 07021723.7
(22) Anmeldetag: 02.06.2005
(51) Int. Cl.: H04L 12/28, H04L 12/56

(54) **Aufbau eines drahtlosen selbstorganisierenden Kommunikationsnetzwerkes**
Establishment of a wireless, autonomous communications network
Procédé d'établissement d'un réseau de communication auto-organisé

(30) Priorität: 02.06.2004 DE 102004026775
(43) Veröffentlichungstag der Anmeldung: 23.01.2008
(62) Teilanmeldung aus: 05752552.9
(73) Patentinhaber: Gigaset Communications GmbH, 81379 München (DE)
(72) Erfinder: Mösker, Volker, 46419 Isselburg (DE); Winkler, Andreas, 41065 Möchengladbach (DE)
(74) Vertreter: Michalski Hüttermann & Partner Patentanwälte

(56) Entgegenhaltungen:
- EP-A- 1 261 171
- WO-A-02/087172

## Beschreibung

Die Erfindung bezieht sich auf ein Verfahren zum Aufbau eines drahtlosen selbstorganisierenden Kommunikationsnetzwerkes gemäß dem Oberbegriff des Patentanspruches 1, ein Sendeempfangsgerät eines drahtlosen selbstorganisierenden Kommunikationsnetzwerkes gemäß dem Oberbegriff des Patentanspruches 9 und ein drahtloses selbstorganisierendes Kommunikationsnetzwerk gemäß dem Oberbegriff des Patentanspruches 5.

Bei drahtlosen Kommunikationsnetzwerken - z.B. nach dem IEEE Standard 802.11a/b/g (WLAN-Standard) funktionierende Computernetzwerke, die von einer Basisstation aufgespannt werden, die ihrerseits auch Datenverkehr weiterleiten können, hängt die Erreichbarkeit aller am Kommunikationsnetzwerk beteiligten Sendeempfangsgeräten (z.B. Fest- oder Mobilstationen zur drahtlosen Telekommunikation) - mit anderen Worten: der Teilnehmer - von der jeweiligen Position des betreffenden Gerätes, das mobil oder stationär ausgebildet sein kann, zu einer vorzugsweise als "Access Point" ausgebildeten Master- oder Basisstation ab.

Die Geräte, die sich nicht in Sichtweite zur Master- bzw. Basisstation befinden, können beispielsweise auch nicht am Netzwerk teilnehmen. Da die Master- bzw. Basisstation - wie vorstehend erwähnt - in der Lage ist, Datenverkehr weiterzuleiten, können zwei Geräte, die einander nicht direkt sehen können, über die Master- bzw. Basisstation miteinander kommunizieren.

Es ist also offensichtlich, dass eine optimale Platzierung der Master- bzw. Basisstation die Performance und die Ausleuchtung eines Kommunikationsnetzwerkes optimieren kann.

Eine Optimierung, wenngleich auch nur eingeschränkt, ist durch einen manuellen Eingriff in die Netzwerktopologie gegeben. Die Optimierung durch einen manuellen Eingriff ist jedoch dann nicht möglich, wenn das Kommunikationsnetzwerk einen Zugang zu einem Festnetz besitzt und dieser in der Regel über die Master- bzw. Basisstation realisiert wird.

Aus der WO 02/087172 A1 ist ein selbstorganisierendes Kommunikationsnetzwerk bekannt, in dem mehrere Sendeempfangsgeräte durch drahtlose Kommunikation miteinander verkehren und von denen ein Sendeempfangsgerät einer Gerätegruppe (cluster) als Master (cluster head) fungiert. Jedes dieser Master-Geräte sendet in regelmäßigen Zeitabständen eine HELLO-Nachricht an benachbarte Sendeempfangsgeräte aus. Empfängt das benachbarte Sendeempfangsgerät innerhalb einer vorgegebenen Zeit keine HELLO-Nachricht, so beginnt es selber eine solche Nachricht auszusenden und operiert damit als Master. Das Master-Gerät wartet anschließend auf Antworten der benachbarten Geräte, die die gesendete HELLO-Nachricht empfangen haben. Sobald es auf die zuvor gesendete Nachricht Antworten empfängt, erstellt es anhand dieser eine gerätespezifische Nachbarschaftsliste von benachbarten Sendeempfangsgeräten. Mit der von dem benachbarten Sendeempfangsgerät gesendeten Antwort wird zugleich der Aufbau einer Verbindung zwischen dem Master-Gerät und dem antwortenden Sendeempfangsgerät initiiert.

Aus der EP 1 261 171 A2 ist ein Funkkommunikationsnetzwerk mit einem Master-Endgerät und mehreren Slave-Endgeräten bekannt. In den Master- und Slave-Endgeräten ist jeweils ein Funkkommunikationsteil vorhanden, über das das Master-Endgerät und die mehreren Slave-Endgeräte miteinander kommunizieren. Darüber hinaus weisen die genannten Geräte ein Steuerteil auf, das im Fall des Master-Endgerätes ausgestaltet ist; um ein Auswahlsignal zu erzeugen und dieses Auswahlsignal über das Funkkommunikationsteil an ein detektiertes Slave-Endgerät zu senden und dass im Fall des Slave-Endgerätes das von dem Master-Endgerät gesendete und über das Funkkommunikationsteil empfangene Auswahlsignal zu erkennen. Das Steuerteil des Master-Endgerätes ist weiterhin derart ausgestaltet, dass ein in einem Operationseingabeteil des Master-Endgerätes durch Operationseingabe zusammen mit einem Identifikationsbefehl eingegebener Identifikator einer Adresse zugeordnet wird, die für das durch das Auswahlsignal ausgewählte Slave-Endgerät spezifisch ist. Das durch das Auswahlsignal ausgewählte Slave-Endgerät enthält einen Auswahlbenachrichtigungsteil, mit einer Anzeigefunktion und/oder einer Tonfunktion, das derart ausgestaltet ist, um auf der Grundlage des Auswahlsignals eine Benachrichtigungsoperation auszuführen.

Aus der DE 199 30 423 A1 ist ein Datenübertragungsnetzwerk mit einer Vielzahl von Netzwerkknoten bekannt, die in dem Netzwerk wahlweise als Master oder Slave operieren können. Der Master ist zudem in der Lage, z.B. wenn er aus dem Netzwerk ausscheidet, einem Slave einen Befehl zur Übernahme der Master-Funktion zu erteilen.

Die der Erfindung zugrunde liegende Aufgabe besteht darin, ein Verfahren zum Aufbau eines drahtlosen selbstorganisierenden Kommunikationsnetzwerkes, ein Sendeempfangsgerät eines drahtlosen selbstorganisierenden Kommunikationsnetzwerkes sowie ein drahtloses selbstorganisierendes Kommunikationsnetzwerk anzugeben, bei dem in dem Kommunikationsnetzwerk, z.B. mit einer autokonfigurierbaren dynamischen Netzwerktopologie für eine optimale Netzwerkperformance und Netzwerkausleuchtung (vgl. Internationale Patentanmeldung; Anmeldungs-Nr. PCT/EP2005/052540 und Veröffentlichungs-Nr. WO 2005/120089 A2), eine Master- bzw. Basisstationsfunktionalität auf einfache Weise, z.B. als Initialzustand für die Autokonfiguration des Netzwerkes, zugewiesen wird.

Diese Aufgabe wird ausgehend von dem im Oberbegriff des Patentanspruches 1 definierten Verfahren durch die im Kennzeichen des Patentanspruches 1 angegebenen Merkmale gelöst.

Außerdem wird die Aufgabe ausgehend von dem im Oberbegriff des Patentanspruches 5 definierten Kommunikationsnetzwerk durch die im Kennzeichen des Patentanspruches 5

Darüber hinaus wird die Aufgabe ausgehend von dem im Oberbegriff des Patentanspruches 9 definierten Sendeempfangsgerät durch die im Kennzeichen des Patentanspruches 9 angegebenen Merkmale gelöst.

Die der Erfindung zugrunde liegende Idee besteht darin, durch funktionale Erweiterungen eines Kommunikationsnetzwerkes (Implementierung eines Algorithmus/einer Methode) das Kommunikationsnetzwerk in die Lage zu versetzen, dass es, z.B. bei einer autokonfigurierbaren dynamischen Netzwerktopologie (vgl. Internationale Patentanmeldung; Anmeldungs-Nr. PCT/EP2005/052540 und Veröffentlichungs-Nr. WO 2005/120089 A2), selbst (automatisch) die Master- bzw. Basisstationsfunktionalität einem Sendeempfangsgerät von am Kommunikationsnetzwerk beteiligten vorzugsweise als mobile und/stationäre ausgebildeten Sendeempfangsgeräten, die z.B. als WLAN-und/oder DECT-Geräte funktionieren, zuweist.

Ein großer Vorteil der in den unabhängigen Patentansprüchen vorgestellten Lösung besteht darin, dass diese sich alleine durch Software-Änderungen realisieren lässt.

Die mit der jeweils angegebenen technischen Lehre verbundene Bereicherung des Standes der Technik liegt zum einen in der automatischen Zuweisungsprozedur als solchen und zum anderen in der Art und Weise, wie diese automatische Zuweisung der Master- bzw. Basisstationsfunktionalität im Detail erfolgt (vgl.: die unabhängigen Patentansprüche 1, 5 und/oder 9).

Der genannte Algorithmus bzw. die genannte Methode funktioniert im Einzelnen folgendermaßen:

Vorzugsweise beim Start des Kommunikationsnetzwerkes (Initialzustand für die Autokonfiguration des Kommunikationsnetzwerkes gemäß der Internationalen Patentanmeldung mit der Anmeldungs-Nr. PCT/EP2005/052540 und der Veröffentlichungs-Nr. WO 2005/120089 A2), hören alle Sendeempfangsgeräte die Umgebung nach bereits bestehenden, aufgebauten Netzwerken ab. Dies geschieht dadurch, dass überprüft wird, ob ein Netzwerkexistenzsignal empfangen wird. Ist dies der Fall, so ist das das Netzwerkexistenzsignal sendende Sendeempfangsgerät das Gerät mit der Master- bzw. Basisstationsfunktionalität, also die Master- bzw. Basisstation. Sind keine Netzwerke vorhanden bzw. wird kein Netzwerkexistenzsignal empfangen, so beginnen sie selbst ein Netzwerk aufzubauen. Hierbei kann es nun vorkommen, dass Geräte, die sich nicht direkt sehen können also sich nicht in unmittelbarer Kommunikationsreichweite zueinander befinden, gleichzeitig ein Netzwerk aufbauen. Ist nun ein Sendeempfangsgerät vorhanden, das gleichzeitig mehrere Netzwerke sehen kann, so muss dieses Sendeempfangsgerät entweder allen Sendeempfangsgeräten oder allen Sendeempfangsgeräten bis auf ein einziges Sendeempfangsgerät eine Anweisung schicken, ihre Netzwerke zu beenden. In diesem Fall ist entweder das die Anweisung sendende Sendeempfangsgerät oder das die Anweisung nicht erhaltende Sendeempfangsgerät die Master- bzw. Basisstation. Der vorstehend vorgestellte Teil des Algorithmus/der Methode beim Start des Kommunikationsnetzwerkes ist in den Patentansprüchen 1, 5 und 9 angegeben.

Weitere vorteilhafte Weiterbildungen der Erfindung sind in den übrigen Unteransprüchen sowie in der nachfolgenden Figurenbeschreibung angegeben.

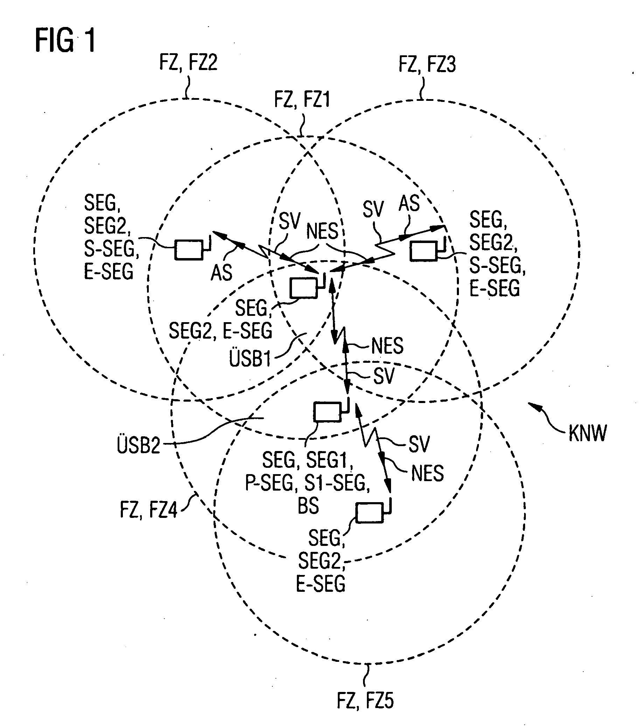

Ein Ausführungsbeispiel der Erfindung wird im Folgenden anhand der FIGUREN 1 bis 6 erläutert. Diese zeigen:
FIGUR 1 ein drahtloses, selbstorganisierendes Kommunikationsnetzwerk ohne Festnetzanbindung und mit einer einzigen Master- bzw. Basisstation beim Start eines ersten Autokonfigurationsszenarios zum Erreichen einer optimalen Netzwerkperformance und Netzwerkausleuchtung (vgl. Internationale Patentanmeldung; Anmeldungs-Nr. PCT/EP2005/052540 und Veröffentlichungs-Nr. WO 2005/120089 A2),

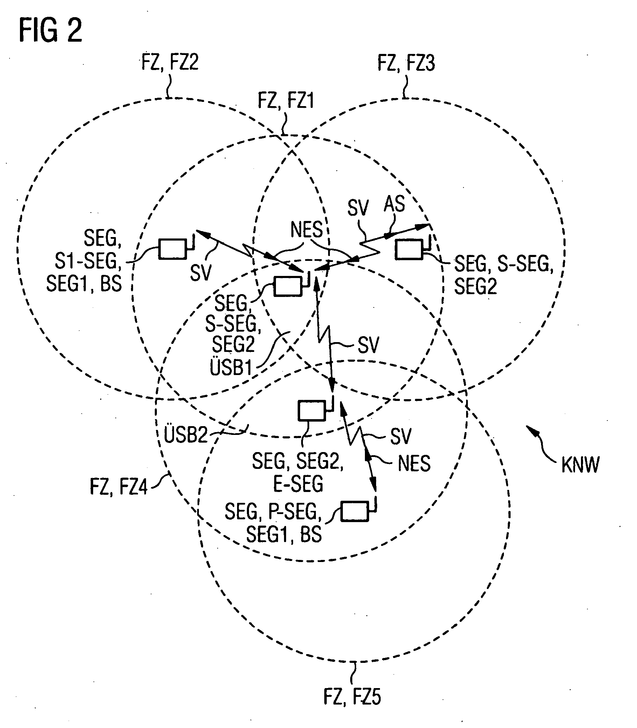

FIGUR 2 ein drahtloses, selbstorganisierendes Kommunikationsnetzwerk ohne Festnetzanbindung und mit zwei Master- bzw. Basisstationen beim Start eines zweiten Autokonfigurationsszenarios zum Erreichen einer optimalen Netzwerkperformance und Netzwerkausleuchtung (vgl. Internationale Patentanmeldung; Anmeldungs-Nr. PCT/EP2005/052540 und Veröffentlichungs-Nr. WO 2005/120089 A2),

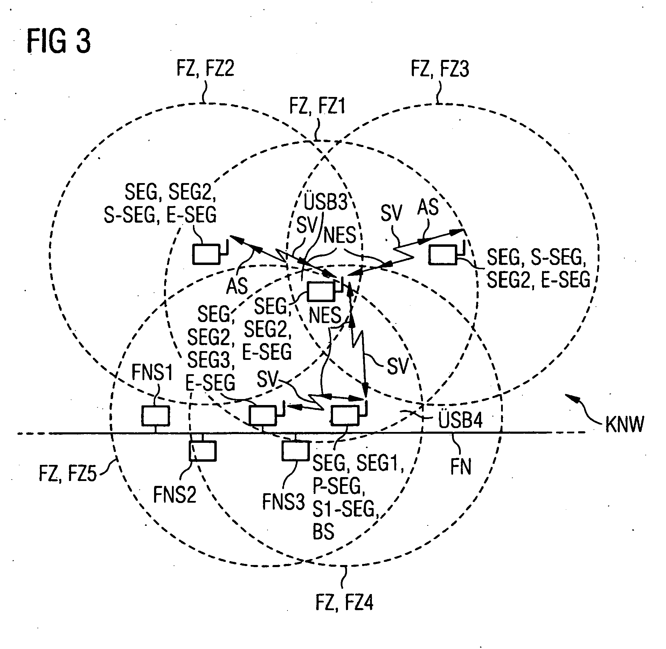

FIGUR 3 ein drahtloses, selbstorganisierendes Kommunikationsnetzwerk mit Festnetzanbindung und mit einer einzigen Master- bzw. Basisstation beim Start eines dritten Autokonfigurationsszenarios zum Erreichen einer optimalen Netzwerkperformance und Netzwerkausleuchtung (vgl. Internationale Patentanmeldung; Anmeldungs-Nr. PCT/EP2005/052540 und Veröffentlichungs-Nr. WO 2005/120089 A2), wobei die Master- bzw. Basisstation beim Start des Autokonfigurationsszenarios die Festnetzanbindung nicht besitzt,

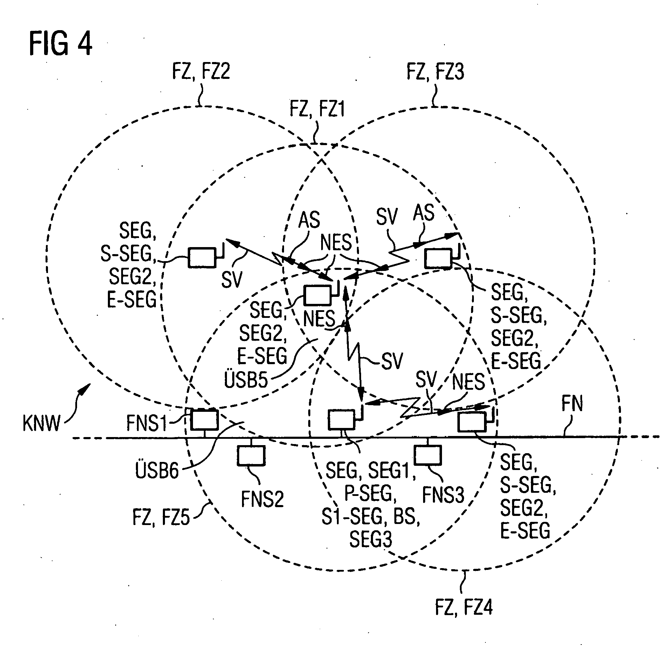

FIGUR 4 ein drahtloses, selbstorganisierendes Kommunikationsnetzwerk mit Festnetzanbindung und mit einer einzigen Master- bzw. Basisstation beim Start eines vierten Autokonfigurationsszenarios zum Erreichen einer optimalen Netzwerkperformance und Netzwerkausleuchtung (vgl. Internationale Patentanmeldung; Anmeldungs-Nr. PCT/EP2005/052540 und Veröffentlichungs-Nr. WO 2005/120089 A2), wobei die Master- bzw. Basisstation beim Start des Autokonfigurationsszenarios die Festnetzanbindung besitzt,

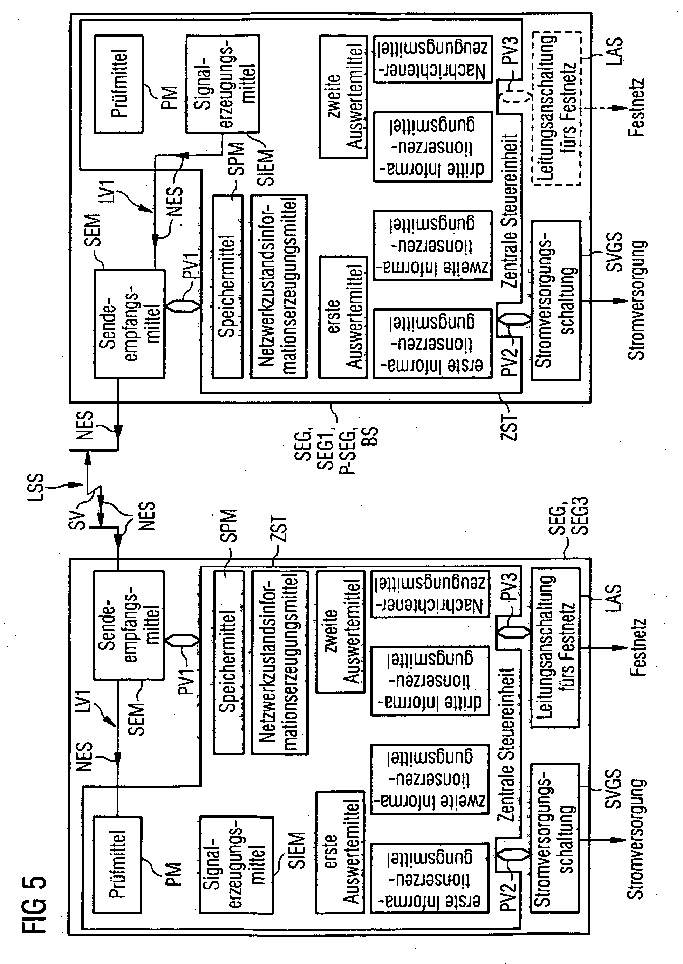

FIGUR 5 Aufbau eines Sendeempfangsgerätes mit Festnetzanbindung und einer Master- bzw. Basisstation die gemäß FIGUR 3 miteinander kommunizieren,

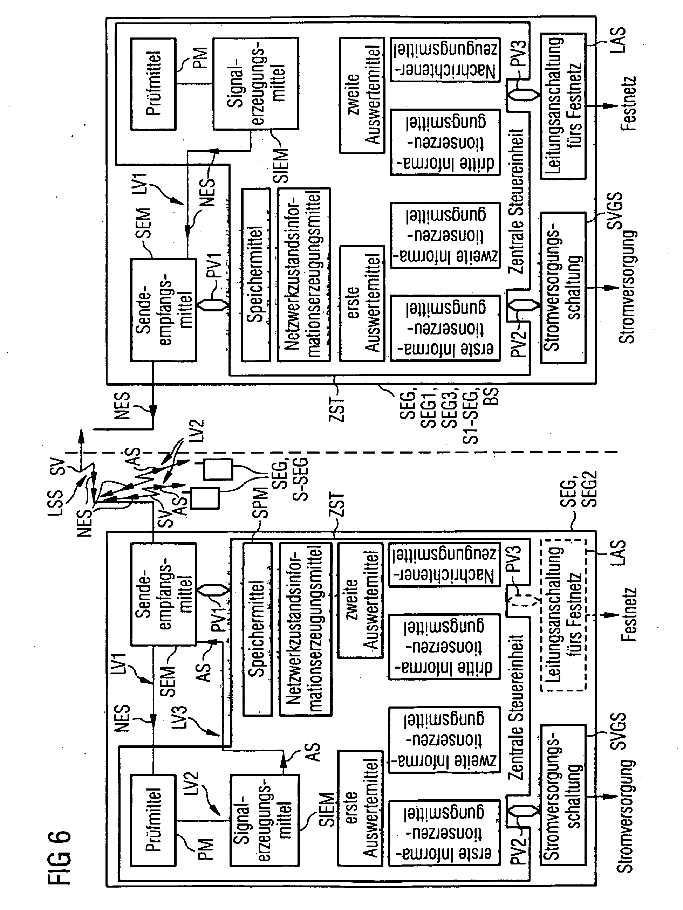

FIGUR 6 Aufbau einer Master- bzw. Basisstation mit Festnetzanbindung und eines Sendeempfangsgerätes die gemäß FIGUR 4 miteinander kommunizieren.

FIGUR 1 zeigt ein drahtloses, selbstorganisierendes Kommunikationsnetzwerk KNW ohne Festnetzanbindung und mit einer einzigen Master- bzw. Basisstation beim Start eines ersten Autokonfigurationsszenarios, bestehend aus vier Autokonfigurationsphasen, zum Erreichen einer optimalen Netzwerkperformance und Netzwerkausleuchtung (vgl. Internationale Patentanmeldung; Anmeldungs-Nr. PCT/EP2005/052540 und Veröffentlichungs-Nr. WO 2005/120089 A2).

Das Kommunikationsnetzwerk KNW weist fünf Sendeempfangsgeräte SEG auf, die jeweils einen idealisierten Funkraum, eine so genannte Funkzelle FZ, abdeckend, im Zentrum der jeweiligen Funkzelle FZ liegend derart zueinander angeordnet sind, dass die einzelnen Funkzellen einen zusammenhängenden Funkversorgungsbereich des Kommunikationsnetzwerkes KNW bilden, bei dem die zu dem Kommunikationsnetzwerk KNW gehörenden Sendeempfangsgeräte SEG entweder unmittelbar oder mittelbar über ein Sendeempfangsgerät funktechnisch miteinander verbunden sind und durch drahtlose Kommunikation (Übertragung von Signalen) miteinander verkehren. Es findet also ein Signalverkehr SV statt. Der Signalverkehr umfasst dabei unter anderem spezielle in vorgegebenen Zeitrahmen gesendete Broadcast-Meldungen.

Das Kommunikationsnetzwerk KNW wird vorzugsweise als "Wireless Local Area Network (WLAN)" oder als DECT-Schnurlostelefonsystem betrieben, während die Sendeempfangsgeräte SEG z.B. als stationäre und/oder mobile Geräte ausgebildet sein können.

Der Funkversorgungsbereich des Kommunikationsnetzwerkes KNW wird gemäß der Darstellung in der FIGUR 1 aus fünf Funkzellen FZ1...FZ5 gebildet, von denen in einer ersten Funkzelle FZ1 vier der fünf Sendeempfangsgeräte SEG enthalten sind. In dieser ersten Funkzelle FZ1 befindet sich des Weiteren ein erster Überschneidungsbereich ÜSB1 von drei zu der ersten Funkzelle FZ1 benachbarten Funkzellen - eine zweite Funkzelle FZ2, eine dritte Funkzelle FZ3 und eine vierte Funkzelle FZ4 -, in dem ein Sendeempfangsgerät SEG der vier Sendeempfangsgeräte SEG angeordnet ist.

Die erste Funkzelle FZ1 bildet darüber hinaus mit einer fünften Funkzelle FZ5 einen zweiten Überschneidungsbereich ÜSB2, der sich in der vierten Funkzelle FZ4 befindet. In diesem zweiten Überschneidungsbereich ÜSB2 ist das zu der vierten Funkzelle FZ4 korrespondierende Sendeempfangsgerät SEG angeordnet.

In einer ersten Phase des Autokonfigurationsszenarios (beim Start des Autokonfigurationsszenarios) gemäß der FIGUR 1 wird von den dem Kommunikationsnetzwerk KNW zugeordneten Sendeempfangsgeräten SEG einem ersten Sendeempfangsgerät SEG1 eine erweiterte Funktionalität, die Master- oder Basisstationsfunktionalität, zugewiesen, während die übrigen Sendeempfangsgeräte SEG, auch als zweite Sendeempfangsgeräte SEG2 bezeichnet, eine gerätespezifische Grundfunktionalität besitzen, wenngleich auch sie, wie das erste Sendeempfangsgerät SEG1, generell in der Lage sind, die Master- bzw. Basisstationsfunktionalität zu übernehmen. Entsprechend der zugewiesenen Funktionalität fungiert das erste Sendeempfangsgerät SEG1 als Master- oder Basisstation BS. Aus der Sicht der Master- bzw. Basisstation BS sind die zweiten Sendeempfangsgeräte SEG2, die sich unmittelbar oder mittelbar in Kommunikationsreichweite zu der Master- bzw. Basisstation BS befinden, Erst-Sendeempfangsgeräte E-SEG.

Gemäß der FIGUR 1 ist es das zu der vierten Funkzelle FZ4 korrespondierende Sendeempfangsgerät SEG, das als erstes Sendeempfangsgerät SEG1 die Master- bzw. Basisstationsfunktionalität besitzt. Das Sendeempfangsgerät SEG der vierten Funkzelle FZ4 kann die Funktionalität entweder vom Betreiber des Kommunikationsnetzwerkes KNW zugewiesen bekommen oder aus dem Kommunikationsnetzwerk KNW heraus durch eine spezielle Zuweisungsprozedur erhalten.

Diese spezielle Zuweisungsprozedur soll im nachfolgenden für das in der FIGUR 1 dargestellte Kommunikationsnetzwerk KNW erläutert werden:

In dem Kommunikationsnetzwerk KNW hat keines der beteiligten Sendeempfangsgeräte SEG Kenntnis von der Existenz des jeweils benachbarten Sendeempfangsgerätes SEG oder der anderen Sendeempfangsgeräte SEG. Jedes Sendeempfangsgerät SEG wird deshalb zunächst einmal ermitteln, ob in seiner Umgebung Sendeempfangsgeräte SEG vorhanden sind oder sogar bereits ein Kommunikationsnetzwerk KNW existiert. Stellt es hierbei fest, dass es kein benachbartes Sendeempfangsgerät SEG gibt, so wird es von sich aus damit beginnen, ein Kommunikationsnetzwerk aufzuspannen. Dies geschieht dadurch, dass das betreffende Sendeempfangsgerät SEG ein Netzwerkexistenzsignal NES als Rundum-Signal (Broadcast-Signal) aussendet. Empfängt ein benachbartes Sendeempfangsgerät SEG das ausgesendete Netzwerkexistenzsignal NES, so unterlässt es das empfangende Sendeempfangsgerät SEG, selbst ein Netzwerkexistenzsignal NES zu auszusenden. Wenn das das Netzwerkexistenzsignal NES empfangende Sendeempfangsgerät SEG das Netzwerkexistenzsignal NES nur ein einziges Mal empfängt - in diesem Fall ist das Netzwerkexistenzsignal NES sendende Sendeempfangsgerät SEG ein Primär-Sendeempfangsgerät P-SEG, dann besitzt das Primär-Sendeempfangsgerät P-SEG aus der Sicht des empfangenden Sendeempfangsgerätes SEG die erweiterte Funktionalität, also die Master- bzw. Basisstationsfunktionalität, und ist somit das erste Sendeempfangsgerät SEG1, das als Basisstation BS fungiert.

Dieser Fall ist in der FIGUR 1 durch die Sendeempfangsgeräte SEG in der vierten Funkzelle FZ4 und der fünften Funkzelle FZ5 dargestellt. Das Sendeempfangsgerät SEG in der vierten Funkzelle FZ4 "broadcastet" das Netzwerkexistenzsignal NES. Dieses Netzwerkexistenzsignal NES kann gemäß dem Funkversorgungsbereich des Kommunikationsnetzwerkes KNW sowohl von dem Sendeempfangsgerät SEG in der ersten Funkzelle FZ1 als auch von dem Sendeempfangsgerät SEG in der fünften Funkzelle FZ5 empfangen werden. Während das Sendeempfangsgerät SEG in der ersten Funkzelle FZ1 das Netzwerkexistenzsignal NES von mehreren benachbarten Sendeempfangsgeräten SEG empfängt, erhält das Sendeempfangsgerät SEG in der fünften Funkzelle FZ5 das Netzwerkexistenzsignal NES nur ein einziges Mal und zwar von dem Sendeempfangsgerät SEG in der vierten Funkzelle FZ4. Das Sendeempfangsgerät SEG in der vierten Funkzelle FZ4 ist somit aus der Sicht des Sendeempfangsgerätes SEG in der fünften Funkzelle FZ5 das bereits erwähnte Primär-Sendeempfangsgerät P-SEG. Inwieweit dieses Primär-Sendeempfangsgerät P-SEG in der vierten Funkzelle FZ4 nun auch die Master- bzw. Basisstationsfunktionalität besitzt und somit das erste Sendeempfangsgerät SEG1 ist, hängt letztlich davon ab, wie sich das Sendeempfangsgerät SEG in der ersten Funkzelle FZ1, das das von dem Primär-Sendeempfangsgerät P-SEG in der vierten Funkzelle FZ4 gesendete Netzwerkexistenzsignal NES ebenfalls erhalten hat, bezüglich dieses Netzwerkempfangssignal NES verhält.

Wenn ein das Netzwerkexistenzsignal NES empfangende Sendeempfangsgerät SEG, wie das Sendeempfangsgerät SEG in der ersten Funkzelle FZ1, statt von einem Sendeempfangsgerät SEG, dem Primär-Sendeempfangsgerät P-SEG, von mehreren Sendeempfangsgeräten SEG, Sekundär-Sendeempfangsgeräten S-SEG, jeweils ein solches Netzwerkexistenzsignal NES empfängt - gemäß der FIUGR 1 sind dies die Sendeempfangsgeräte SEG in der zweiten Funkzelle FZ2, der dritten Funkzelle FZ3 und der vierten Funkzelle FZ4, so sendet das die verschiedenen Netzwerkexistenzsignale NES empfangende Sendeempfangsgerät SEG in der ersten Funkzelle FZ1 entweder an alle Sekundär-Sendeempfangsgerät S-SEG oder an alle Sekundär-Sendeempfangsgeräte S-SEG mit Ausnahme eines ersten Sekundär-Sendeempfangsgerätes S1-SEG jeweils ein Anweisungssignal AS, mit dem das betreffende Sekundär-Sendeempfangsgerät S-SEG jeweils angewiesen wird, das Aussenden des Netzwerkexistenzsignals NES zu beenden.

Im erstgenannten Fall wäre das die Netzwerkexistenzsignals NES empfangende Sendeempfangsgerät SEG dann das erste Sendeempfangsgerät SEG1, das die Master- bzw. Basisstationsfunktionalität besitzt. Im letztgenannten Fall hingegen wäre das erste Sekundär-Sendeempfangsgerät S1-SEG, das das Anweisungssignal AS nicht erhalten hat, das erste Sendeempfangsgerät SEG1, das die Master- bzw. Basisstationsfunktionalität besitzt.

Gemäß der FIGUR 1 wird das Anweisungssignal AS von dem Sendeempfangsgerät SEG in der ersten Funkzelle FZ1 an die Sendeempfangsgeräte SEG in der zweiten Funkzellen FZ2 und der dritten Funkzelle FZ3 gesendet, während das Sendeempfangsgerät SEG in der vierten Funkzelle FZ4 das Anweisungssignal AS nicht erhält. Damit ist das Sendeempfangsgerät SEG in der vierten Funkzelle FZ4 zugleich Primär-Sendeempfangsgerät P-SEG (aus der Sicht des Sendeempfangsgerätes SEG in der fünften Funkzelle FZ5) und erstes Sekundär-Sendeempfangsgerät S1-SEG (aus der Sicht des Sendeempfangsgerätes SEG in der ersten Funkzelle FZ1) und somit endgültig das erste Sendeempfangsgerät SEG1, das auch gemäß der Zuweisungsprozedur die Master- bzw. Basisstationsfunktionalität besitzt und damit als Basisstation BS fungiert.

FIGUR 2 zeigt ein drahtloses, selbstorganisierendes Kommunikationsnetzwerk KNW ohne Festnetzanbindung und mit zwei Master- bzw. Basisstationen beim Start eines zweiten Autokonfigurationsszenarios, bestehend aus wieder vier Autokonfigurationsphasen wie bei ersten Szenario, zum Erreichen einer optimalen Netzwerkperformance und Netzwerkausleuchtung (vgl. Internationale Patentanmeldung; Anmeldungs-Nr. PCT/EP2005/052540 und Veröffentlichungs-Nr. WO 2005/120089 A2).

Das Kommunikationsnetzwerk KNW weist wieder fünf Sendeempfangsgeräte SEG auf, die jeweils einen idealisierten Funkraum, eine so genannte Funkzelle FZ, abdeckend, im Zentrum der jeweiligen Funkzelle FZ liegend derart zueinander angeordnet sind, dass die einzelnen Funkzellen einen zusammenhängenden Funkversorgungsbereich des Kommunikationsnetzwerkes KNW bilden, bei dem die zu dem Kommunikationsnetzwerk KNW gehörenden Sendeempfangsgeräte SEG wieder entweder unmittelbar oder mittelbar über ein Sendeempfangsgerät funktechnisch miteinander verbunden sind und durch drahtlose Kommunikation (Übertragung von Signalen) miteinander verkehren. Es findet also wieder ein Signalverkehr SV statt. Der Signalverkehr umfasst dabei erneut unter anderem spezielle in vorgegebenen Zeitrahmen gesendete Broadcast-Meldungen.

Das Kommunikationsnetzwerk KNW wird wieder vorzugsweise als "Wireless Local Area Network (WLAN)" oder als DECT-Schnurlostelefonsystem betrieben, während die Sendeempfangsgeräte SEG z.B. als stationäre und/oder mobile Geräte ausgebildet sein können.

Der Funkversorgungsbereich des Kommunikationsnetzwerkes KNW wird gemäß der Darstellung in der FIGUR 2 wieder aus fünf Funkzellen FZ1...FZ5 gebildet, von denen wieder in einer ersten Funkzelle FZ1 vier der fünf Sendeempfangsgeräte SEG enthalten sind. In dieser ersten Funkzelle FZ1 befindet sich des Weiteren wieder ein erster Überschneidungsbereich ÜSB1 von wieder drei zu der ersten Funkzelle FZ1 benachbarten Funkzellen - eine zweite Funkzelle FZ2, eine dritte Funkzelle FZ3 und eine vierte Funkzelle FZ4 -, in dem ein Sendeempfangsgerät SEG der vier Sendeempfangsgeräte SEG angeordnet ist.

Die erste Funkzelle FZ1 bildet darüber hinaus wieder mit einer fünften Funkzelle FZ5 einen zweiten Überschneidungsbereich ÜSB2, der sich in der vierten Funkzelle FZ4 befindet. In diesem zweiten Überschneidungsbereich ÜSB2 ist wieder das zu der vierten Funkzelle FZ4 korrespondierende Sendeempfangsgerät SEG angeordnet.

In einer ersten Phase des Autokonfigurationsszenarios (beim Start des Autokonfigurationsszenarios) gemäß der FIGUR 2 werden von den dem Kommunikationsnetzwerk KNW zugeordneten Sendeempfangsgeräten SEG zwei ersten Sendeempfangsgeräten SEG1 eine erweiterte Funktionalität, die Master- oder Basisstationsfunktionalität, zugewiesen, während die übrigen Sendeempfangsgeräte SEG, auch als zweite Sendeempfangsgeräte SEG2 bezeichnet, eine gerätespezifische Grundfunktionalität besitzen, wenngleich auch sie, wie das erste Sendeempfangsgerät SEG1, generell in der Lage sind, die Master- bzw. Basisstationsfunktionalität zu übernehmen. Entsprechend der zugewiesenen Funktionalität fungiert das erste Sendeempfangsgerät SEG1 als Master- oder Basisstation BS. Aus der Sicht der Master- bzw. Basisstation BS sind die zweiten Sendeempfangsgeräte SEG2, die sich unmittelbar oder mittelbar in Kommunikationsreichweite zu der Master- bzw. Basisstation BS befinden, Erst-Sendeempfangsgeräte E-SEG.

Gemäß der FIGUR 2 sind es die zu der zweiten Funkzelle FZ2 und der fünften Funkzelle FZ5 korrespondierenden Sendeempfangsgeräte SEG, die als erste Sendeempfangsgeräte SEG1 die Master- bzw. Basisstationsfunktionalität besitzen. Die Sendeempfangsgeräte SEG der zweiten und fünften Funkzelle FZ2, FZ5 können die Funktionalität wieder entweder vom Betreiber des Kommunikationsnetzwerkes KNW zugewiesen bekommen oder aus dem Kommunikationsnetzwerk KNW heraus durch eine spezielle Zuweisungsprozedur erhalten.

Diese spezielle Zuweisungsprozedur soll im nachfolgenden für das in der FIGUR 2 dargestellte Kommunikationsnetzwerk KNW erläutert werden:

In dem Kommunikationsnetzwerk KNW hat wieder keines der beteiligten Sendeempfangsgeräte SEG Kenntnis von der Existenz des jeweils benachbarten Sendeempfangsgerätes SEG oder der anderen Sendeempfangsgeräte SEG. Jedes Sendeempfangsgerät SEG wird deshalb wieder zunächst einmal ermitteln, ob in seiner Umgebung Sendeempfangsgeräte SEG vorhanden sind oder sogar bereits ein Kommunikationsnetzwerk KNW existiert. Stellt es hierbei fest, dass es kein benachbartes Sendeempfangsgerät SEG gibt, so wird es wieder von sich aus damit beginnen, ein Kommunikationsnetzwerk aufzuspannen. Dies geschieht dadurch, dass das betreffende Sendeempfangsgerät SEG ein Netzwerkexistenzsignal NES als Rundum-Signal (Broadcast-Signal) aussendet. Empfängt ein benachbartes Sendeempfangsgerät SEG das ausgesendete Netzwerkexistenzsignal NES, so unterlässt es das empfangende Sendeempfangsgerät SEG wieder, selbst ein Netzwerkexistenzsignal NES zu auszusenden. Wenn das das Netzwerkexistenzsignal NES empfangende Sendeempfangsgerät SEG das Netzwerkexistenzsignal NES nur ein einziges Mal empfängt - in diesem Fall ist das Netzwerkexistenzsignal NES sendende Sendeempfangsgerät SEG ein Primär-Sendeempfangsgerät P-SEG, dann besitzt das Primär-Sendeempfangsgerät P-SEG aus der Sicht des empfangenden Sendeempfangsgerätes SEG gemäß der Zuweisungsprozedur die erweiterte Funktionalität, also die Master- bzw. Basisstationsfunktionalität, und ist somit das erste Sendeempfangsgerät SEG1, das als Basisstation BS fungiert.

Dieser Fall ist in der FIGUR 2 durch die Sendeempfangsgeräte SEG in der vierten Funkzelle FZ4 und der fünften Funkzelle FZ5 dargestellt. Das Sendeempfangsgerät SEG in der fünften Funkzelle FZ5 "broadcastet" das Netzwerkexistenzsignal NES. Dieses Netzwerkexistenzsignal NES kann gemäß dem Funkversorgungsbereich des Kommunikationsnetzwerkes KNW nur von dem Sendeempfangsgerät SEG in der vierten Funkzelle FZ4 empfangen werden. Das Sendeempfangsgerät SEG in der vierten Funkzelle FZ4 erhält. da es von dem ebenfalls benachbarten Sendeempfangsgerät SEG in der ersten Funkzelle FZ1 kein Netzwerkexistenzsignal NES empfängt, das Netzwerkexistenzsignal NES nur ein einziges Mal und zwar von dem Sendeempfangsgerät SEG in der fünften Funkzelle FZ5. Das Sendeempfangsgerät SEG in der fünften Funkzelle FZ5 ist somit aus der Sicht des Sendeempfangsgerätes SEG in der vierten Funkzelle FZ4 das bereits erwähnte Primär-Sendeempfangsgerät P-SEG, das zudem auch bereits die Master- bzw. Basisstationsfunktionalität besitzt und somit das erste Sendeempfangsgerät SEG1 ist, weil weder ein weiteres Sendeempfangsgerät SEG zu dem Sendeempfangsgerät SEG in der fünften Funkzelle FZ5 benachbart ist noch das Sendeempfangsgerät SEG in der ersten Funkzelle FZ1 ein Netzwerkexistenzsignal NES an das Sendeempfangsgerät SEG in der vierten Funkzelle FZ4 gesendet hat.

Wenn ein das Netzwerkexistenzsignal NES empfangende Sendeempfangsgerät SEG - gemäß der FIUGR 2 ist dies das Sendeempfangsgerät SEG in der ersten Funkzelle FZ1 - statt von einem Sendeempfangsgerät SEG, dem Primär-Sendeempfangsgerät P-SEG, von mehreren Sendeempfangsgeräten SEG, Sekundär-Sendeempfangsgeräten S-SEG, jeweils ein Netzwerkexistenzsignal NES empfängt - gemäß der FIUGR 2 sind dies die Sendeempfangsgeräte SEG in der zweiten Funkzelle FZ2 und der dritten Funkzelle FZ3, so sendet das die verschiedenen Netzwerkexistenzsignale NES empfangende Sendeempfangsgerät SEG in der ersten Funkzelle FZ1 wieder entweder an alle Sekundär-Sendeempfangsgerät S-SEG oder an alle Sekundär-Sendeempfangsgeräte S-SEG mit Ausnahme eines ersten Sekundär-Sendeempfangsgerätes S1-SEG jeweils ein Anweisungssignal AS, mit dem das betreffende Sekundär-Sendeempfangsgerät S-SEG jeweils angewiesen wird, das Aussenden des Netzwerkexistenzsignals NES zu beenden.

Im erstgenannten Fall wäre das die Netzwerkexistenzsignals NES empfangende Sendeempfangsgerät SEG dann das erste Sendeempfangsgerät SEG1, das die Master- bzw. Basisstationsfunktionalität besitzt. Im letztgenannten Fall hingegen wäre das erste Sekundär-Sendeempfangsgerät S1-SEG, das das Anweisungssignal AS nicht erhalten hat, das erste Sendeempfangsgerät SEG1, das die Master- bzw. Basisstationsfunktionalität besitzt.

Gemäß der FIGUR 2 wird das Anweisungssignal AS von dem Sendeempfangsgerät SEG in der ersten Funkzelle FZ1 an das Sendeempfangsgerät SEG in der dritten Funkzellen FZ3 gesendet, während das Sende-Empfangsgerät SEG in der zweiten Funkzelle FZ2 das Anweisungssignal AS nicht erhält. Damit ist das Sendeempfangsgerät SEG in der zweiten Funkzelle FZ2 erstes Sekundär-Sendeempfangsgerät S1-SEG (aus der Sicht des Sendeempfangsgerätes SEG in der ersten Funkzelle FZ1), das neben dem Sendeempfangsgerät SEG in der fünften Funkzelle FZ5 gemäß der Zuweisungsprozedur die Master- bzw. Basisstationsfunktionalität besitzt und damit als Basisstation BS fungiert.

FIGUR 3 zeigt ein drahtloses, selbstorganisierendes Kommunikationsnetzwerk KNW mit Festnetzanbindung und mit einer einzigen Master- bzw. Basisstation beim Start eines dritten Autokonfigurationsszenarios, wieder bestehend aus vier Autokonfigurationsphasen wie beim ersten und zweiten Szenario, zum Erreichen einer optimalen Netzwerkperformance und Netzwerkausleuchtung (vgl. Internationale Patentanmeldung; Anmeldungs-Nr. PCT/EP2005/052540 und Veröffentlichungs-Nr. WO 2005/120089 A2), wobei die Master- bzw. Basisstation beim Start des Autokonfigurationsszenarios die Festnetzanbindung nicht besitzt.

Das Kommunikationsnetzwerk KNW weist wieder fünf Sendeempfangsgeräte SEG auf, die wieder jeweils einen idealisierten Funkraum, eine so genannte Funkzelle FZ, abdeckend, im Zentrum der jeweiligen Funkzelle FZ liegend derart zueinander angeordnet sind, dass die einzelnen Funkzellen einen zusammenhängenden Funkversorgungsbereich des Kommunikationsnetzwerkes KNW bilden, bei dem die zu dem Kommunikationsnetzwerk KNW gehörenden Sendeempfangsgeräte SEG entweder unmittelbar oder mittelbar über ein Sendeempfangsgerät funktechnisch miteinander verbunden sind und durch drahtlose Kommunikation (Übertragung von Signalen) miteinander verkehren. Es findet also wieder ein Signalverkehr SV statt. Der Signalverkehr umfasst dabei erneut unter anderem spezielle in vorgegebenen Zeitrahmen gesendete Broadcast-Meldungen.

Das Kommunikationsnetzwerk KNW wird vorzugsweise als "Wireless Local Area Network (WLAN)" oder als DECT-Schnurlostelefonsystem betrieben, während die Sendeempfangsgeräte SEG z.B. als stationäre und/oder mobile Geräte ausgebildet sein können.

Der Funkversorgungsbereich des Kommunikationsnetzwerkes KNW wird gemäß der Darstellung in der FIGUR 3 wieder aus fünf Funkzellen FZ1...FZ5 gebildet, von denen in einer ersten Funkzelle FZ1 alle fünf Sendeempfangsgeräte SEG enthalten sind. In dieser ersten Funkzelle FZ1 befindet sich des Weiteren ein dritter Überschneidungsbereich ÜSB3 von vier zu der ersten Funkzelle FZ1 benachbarten Funkzellen - eine zweite Funkzelle FZ2, eine dritte Funkzelle FZ3, eine vierte Funkzelle FZ4 und eine fünfte Funkzelle FZ5 -, in dem ein Sendeempfangsgerät SEG der vier Sendeempfangsgeräte SEG angeordnet ist.

Die erste Funkzelle FZ1 bildet darüber hinaus mit der vierten und fünften Funkzelle FZ4, FZ5 einen vierten Überschneidungsbereich ÜSB4, der sich ebenfalls in der ersten Funkzelle FZ1 befindet. In diesem vierten Überschneidungsbereich ÜSB4 sind das zu der ersten Funkzelle FZ1 korrespondierende Sendeempfangsgerät SEG, das zu der vierten Funkzelle FZ4 korrespondierende Sendeempfangsgerät SEG und das zu der fünften Funkzelle FZ5 korrespondierende Sendeempfangsgerät SEG angeordnet.

In einer ersten Phase des dritten Autokonfigurationsszenarios (beim Start des Autokonfigurationsszenarios) gemäß der FIGUR 3 wird von den dem Kommunikationsnetzwerk KNW zugeordneten Sendeempfangsgeräten SEG wieder einem ersten Sendeempfangsgerät SEG1 eine erweiterte Funktionalität, die Master- oder Basisstationsfunktionalität, zugewiesen, während die übrigen Sendeempfangsgeräte SEG, auch als zweite Sendeempfangsgeräte SEG2 bezeichnet, eine gerätespezifische Grundfunktionalität besitzen, wenngleich auch sie, wie das erste Sendeempfangsgerät SEG1, wieder generell in der Lage sind, die Master- bzw. Basisstationsfunktionalität zu übernehmen. Entsprechend der zugewiesenen Funktionalität fungiert das erste Sendeempfangsgerät SEG1 wieder als Master- oder Basisstation BS. Aus der Sicht der Master- bzw. Basisstation BS sind die zweiten Sendeempfangsgeräte SEG2, die sich unmittelbar oder mittelbar in Kommunikationsreichweite zu der Master- bzw. Basisstation BS befinden, wieder Erst-Sendeempfangsgeräte E-SEG.

Das Kommunikationsnetzwerk KNW in der FIGUR 3 unterscheidet sich von den bisherigen Kommunikationsnetzwerken KNW in den FIGUREN 1 und 2 dadurch, dass das zu der fünften Funkzelle FZ5 korrespondierende Sendeempfangsgerät SEG als drittes Sendeempfangsgerät SEG3 neben herkömmlichen Festnetzstationen FNS1...FNS3, von denen eine erste Festnetzstation FNS1 in der fünften Funkzelle FZ5 und eine zweite und dritte Festnetzstation FNS2, FNS3 sowohl in der vierten Funkzelle FZ4 als auch in der fünften Funkzelle FZ5 enthalten sind, über eine Festnetzanbindung mit einem Festnetz FN verbunden ist.

Gemäß der FIGUR 3 ist es das zu der vierten Funkzelle FZ4 korrespondierende Sendeempfangsgerät SEG, das als erstes Sendeempfangsgerät SEG1 die Master- bzw. Basisstationsfunktionalität besitzt. Das Sendeempfangsgerät SEG der vierten Funkzelle FZ4 kann die Funktionalität entweder vom Betreiber des Kommunikationsnetzwerkes KNW zugewiesen bekommen oder aus dem Kommunikationsnetzwerk KNW heraus durch eine spezielle Zuweisungsprozedur erhalten.

Diese spezielle Zuweisungsprozedur soll im nachfolgenden für das in der FIGUR 3 dargestellte Kommunikationsnetzwerk KNW erläutert werden:

In dem Kommunikationsnetzwerk KNW hat wieder keines der beteiligten Sendeempfangsgeräte SEG Kenntnis von der Existenz des jeweils benachbarten Sendeempfangsgerätes SEG oder der anderen Sendeempfangsgeräte SEG. Jedes Sendeempfangsgerät SEG wird deshalb wieder zunächst einmal ermitteln, ob in seiner Umgebung Sendeempfangsgeräte SEG vorhanden sind oder sogar bereits ein Kommunikationsnetzwerk KNW existiert. Stellt es hierbei fest, dass es kein benachbartes Sendeempfangsgerät SEG gibt, so wird es wieder von sich aus damit beginnen, ein Kommunikationsnetzwerk aufzuspannen. Dies geschieht wieder dadurch, dass das betreffende Sendeempfangsgerät SEG ein Netzwerkexistenzsignal NES als Rundum-Signal (Broadcast-Signal) aussendet. Empfängt ein benachbartes Sendeempfangsgerät SEG das ausgesendete Netzwerkexistenzsignal NES, so unterlässt es das empfangende Sendeempfangsgerät SEG wieder, selbst ein Netzwerkexistenzsignal NES zu auszusenden. Wenn das das Netzwerkexistenzsignal NES empfangende Sendeempfangsgerät SEG das Netzwerkexistenzsignal NES nur ein einziges Mal empfängt - in diesem Fall ist das Netzwerkexistenzsignal NES sendende Sendeempfangsgerät SEG wieder ein Primär-Sendeempfangsgerät P-SEG, dann besitzt das Primär-Sendeempfangsgerät P-SEG aus der Sicht des empfangenden Sendeempfangsgerätes SEG die erweiterte Funktionalität, also die Master- bzw. Basisstationsfunktionalität, und ist somit das erste Sendeempfangsgerät SEG1, das als Basisstation BS fungiert.

Dieser Fall ist in der FIGUR 3 durch die Sendeempfangsgeräte SEG in der vierten Funkzelle FZ4 und der fünften Funkzelle FZ5 dargestellt. Das Sendeempfangsgerät SEG in der vierten Funkzelle FZ4 "broadcastet" das Netzwerkexistenzsignal NES. Dieses Netzwerkexistenzsignal NES kann gemäß dem Funkversorgungsbereich des Kommunikationsnetzwerkes KNW sowohl von dem Sendeempfangsgerät SEG in der ersten Funkzelle FZ1 als auch von dem Sendeempfangsgerät SEG in der fünften Funkzelle FZ5 empfangen werden. Während das Sendeempfangsgerät SEG in der ersten Funkzelle FZ1 das Netzwerkexistenzsignal NES von mehreren benachbarten Sendeempfangsgeräten SEG empfängt, erhält das Sendeempfangsgerät SEG in der fünften Funkzelle FZ5 das Netzwerkexistenzsignal NES nur ein einziges Mal und zwar von dem Sendeempfangsgerät SEG in der vierten Funkzelle FZ4. Das Sendeempfangsgerät SEG in der vierten Funkzelle FZ4 ist somit aus der Sicht des Sendeempfangsgerätes SEG in der fünften Funkzelle FZ5 das bereits erwähnte Primär-Sendeempfangsgerät P-SEG. Inwieweit dieses Primär-Sendeempfangsgerät P-SEG in der vierten Funkzelle FZ4 nun auch die Master- bzw. Basisstationsfunktionalität besitzt und somit das erste Sendeempfangsgerät SEG1 ist, hängt letztlich davon ab, wie sich das Sendeempfangsgerät SEG in der ersten Funkzelle FZ1, das das von dem Primär-Sendeempfangsgerät P-SEG in der vierten Funkzelle FZ4 gesendete Netzwerkexistenzsignal NES ebenfalls erhalten hat, bezüglich dieses Netzwerkempfangssignal NES verhält.

Wenn ein das Netzwerkexistenzsignal NES empfangende Sendeempfangsgerät SEG, wie das Sendeempfangsgerät SEG in der ersten Funkzelle FZ1, statt von einem Sendeempfangsgerät SEG, dem Primär-Sendeempfangsgerät P-SEG, von mehreren Sendeempfangsgeräten SEG, Sekundär-Sendeempfangsgeräten S-SEG, jeweils ein solches Netzwerkexistenzsignal NES empfängt - gemäß der FIUGR 11 sind dies die Sendeempfangsgeräte SEG in der zweiten Funkzelle FZ2, der dritten Funkzelle FZ3 und der vierten Funkzelle FZ4, so sendet das die verschiedenen Netzwerkexistenzsignale NES empfangende Sendeempfangsgerät SEG in der ersten Funkzelle FZ1 wieder entweder an alle Sekundär-Sendeempfangsgerät S-SEG oder an alle Sekundär-Sendeempfangsgeräte S-SEG mit Ausnahme eines ersten Sekundär-Sendeempfangsgerätes S1-SEG jeweils ein Anweisungssignal AS, mit dem das betreffende Sekundär-Sendeempfangsgerät S-SEG jeweils angewiesen wird, das Aussenden des Netzwerkexistenzsignals NES zu beenden.

Im erstgenannten Fall wäre das die Netzwerkexistenzsignals NES empfangende Sendeempfangsgerät SEG dann das erste Sendeempfangsgerät SEG1, das die Master- bzw. Basisstationsfunktionalität besitzt. Im letztgenannten Fall hingegen wäre das erste Sekundär-Sendeempfangsgerät S1-SEG, das das Anweisungssignal AS nicht erhalten hat, das erste Sendeempfangsgerät SEG1, das die Master- bzw. Basisstationsfunktionalität besitzt.

Gemäß der FIGUR 3 wird das Anweisungssignal AS von dem Sendeempfangsgerät SEG in der ersten Funkzelle FZ1 an die Sendeempfangsgeräte SEG in der zweiten Funkzellen FZ2 und der dritten Funkzelle FZ3 gesendet, während das Sendeempfangsgerät SEG in der vierten Funkzelle FZ4 das Anweisungssignal AS nicht erhält. Damit ist das Sendeempfangsgerät SEG in der vierten Funkzelle FZ4 zugleich Primär-Sendeempfangsgerät P-SEG (aus der Sicht des Sendeempfangsgerätes SEG in der fünften Funkzelle FZ5) und erstes Sekundär-Sendeempfangsgerät S1-SEG (aus der Sicht des Sendeempfangsgerätes SEG in der ersten Funkzelle FZ1) und somit endgültig das erste Sendeempfangsgerät SEG1, das auch gemäß der Zuweisungsprozedur die Master- bzw. Basisstationsfunktionalität besitzt und damit als Basisstation BS fungiert.

FIGUR 4 zeigt ein drahtloses, selbstorganisierendes Kommunikationsnetzwerk KNW mit Festnetzanbindung und mit einer einzigen Master- bzw. Basisstation beim Start eines vierten Autokonfigurationsszenarios, wieder bestehend aus vier Autokonfigurationsphasen wie beim ersten bis dritten Szenario, zum Erreichen einer optimalen Netzwerkperformance und Netzwerkausleuchtung (vgl. Internationale Patentanmeldung; Anmeldungs-Nr. PCT/EP2005/052540 und Veröffentlichungs-Nr. WO 2005/120089 A2), wobei die Master- bzw. Basisstation beim Start des Autokonfigurationsszenarios im Unterschied zum dritten Szenario die Festnetzanbindung besitzt.

Das Kommunikationsnetzwerk KNW weist wieder fünf Sendeempfangsgeräte SEG auf, die wieder jeweils einen idealisierten Funkraum, eine so genannte Funkzelle FZ, abdeckend, im Zentrum der jeweiligen Funkzelle FZ liegend derart zueinander angeordnet sind, dass die einzelnen Funkzellen einen zusammenhängenden Funkversorgungsbereich des Kommunikationsnetzwerkes KNW bilden, bei dem die zu dem Kommunikationsnetzwerk KNW gehörenden Sendeempfangsgeräte SEG entweder unmittelbar oder mittelbar über ein Sendeempfangsgerät funktechnisch miteinander verbunden sind und durch drahtlose Kommunikation (Übertragung von Signalen) miteinander verkehren. Es findet also wieder ein Signalverkehr SV statt. Der Signalverkehr umfasst dabei erneut unter anderem spezielle in vorgegebenen Zeitrahmen gesendete Broadcast-Meldungen.

Das Kommunikationsnetzwerk KNW wird vorzugsweise als "Wireless Local Area Network (WLAN)" oder als DECT-Schnurlostelefonsystem betrieben, während die Sendeempfangsgeräte SEG z.B. als stationäre und/oder mobile Geräte ausgebildet sein können.

Der Funkversorgungsbereich des Kommunikationsnetzwerkes KNW wird gemäß der Darstellung in der FIGUR 4 wieder aus fünf Funkzellen FZ1...FZ5 gebildet, von denen in einer ersten Funkzelle FZ1 vier der fünf Sendeempfangsgeräte SEG enthalten sind. In dieser ersten Funkzelle FZ1 befindet sich des Weiteren ein fünfter Überschneidungsbereich ÜSB5 von drei zu der ersten Funkzelle FZ1 benachbarten Funkzellen - eine zweite Funkzelle FZ2, eine dritte Funkzelle FZ3 und eine fünfte Funkzelle FZ5 -, in dem ein Sendeempfangsgerät SEG der vier Sendeempfangsgeräte SEG angeordnet ist.

Die erste Funkzelle FZ1 bildet darüber hinaus mit der fünften Funkzelle FZ5 einen sechsten Überschneidungsbereich ÜSB6, der sich ebenfalls in der ersten Funkzelle FZ1 befindet. In diesem sechsten Überschneidungsbereich ÜSB6 sind das zu der ersten Funkzelle FZ1 korrespondierende Sendeempfangsgerät SEG und das zu der fünften Funkzelle FZ5 korrespondierende Sendeempfangsgerät SEG angeordnet.

In einer ersten Phase des vierten Autokonfigurationsszenarios (beim Start des Autokonfigurationsszenarios) gemäß der FIGUR 4 wird von den dem Kommunikationsnetzwerk KNW zugeordneten Sendeempfangsgeräten SEG wieder einem ersten Sendeempfangsgerät SEG1 eine erweiterte Funktionalität, die Master- oder Basisstationsfunktionalität, zugewiesen, während die übrigen Sendeempfangsgeräte SEG, auch als zweite Sendeempfangsgeräte SEG2 bezeichnet, eine gerätespezifische Grundfunktionalität besitzen, wenngleich auch sie, wie das erste Sendeempfangsgerät SEG1, wieder generell in der Lage sind, die Master- bzw. Basisstationsfunktionalität zu übernehmen. Entsprechend der zugewiesenen Funktionalität fungiert das erste Sendeempfangsgerät SEG1 wieder als Master- oder Basisstation BS. Aus der Sicht der Master- bzw. Basisstation BS sind die zweiten Sendeempfangsgeräte SEG2, die sich unmittelbar oder mittelbar in Kommunikationsreichweite zu der Master- bzw. Basisstation BS befinden, wieder Erst-Sendeempfangsgeräte E-SEG.

Das Kommunikationsnetzwerk KNW in der FIGUR 4 unterscheidet sich von den Kommunikationsnetzwerken KNW in den FIGUREN 1 und 2 dadurch, dass das zu der fünften Funkzelle FZ5 korrespondierende Sendeempfangsgerät SEG als drittes Sendeempfangsgerät SEG3 neben herkömmlichen Festnetzstationen FNS1...FNS3, von denen eine erste Festnetzstation FNS1 und eine zweite Festnetzstation FNS2 in der fünften Funkzelle FZ5 und eine dritte Festnetzstation FNS3 sowohl in der vierten Funkzelle FZ4 als auch in der fünften Funkzelle FZ5 enthalten sind, über eine Festnetzanbindung mit einem Festnetz FN verbunden ist.

Darüber hinaus besitzt gemäß der FIGUR 4 das zu der fünften Funkzelle FZ5 korrespondierende dritte Sendeempfangsgerät SEG3 als erstes Sendeempfangsgerät SEG1 die Master- bzw. Basisstationsfunktionalität. Das Sendeempfangsgerät SEG der vierten Funkzelle FZ4 kann die Funktionalität entweder vom Betreiber des Kommunikationsnetzwerkes KNW zugewiesen bekommen oder aus dem Kommunikationsnetzwerk KNW heraus durch eine spezielle Zuweisungsprozedur erhalten.

Diese spezielle Zuweisungsprozedur soll im nachfolgenden für das in der FIGUR 4 dargestellte Kommunikationsnetzwerk KNW erläutert werden:

In dem Kommunikationsnetzwerk KNW hat wieder keines der beteiligten Sendeempfangsgeräte SEG Kenntnis von der Existenz des jeweils benachbarten Sendeempfangsgerätes SEG oder der anderen Sendeempfangsgeräte SEG. Jedes Sendeempfangsgerät SEG wird deshalb wieder zunächst einmal ermitteln, ob in seiner Umgebung Sendeempfangsgeräte SEG vorhanden sind oder sogar bereits ein Kommunikationsnetzwerk KNW existiert. Stellt es hierbei fest, dass es kein benachbartes Sendeempfangsgerät SEG gibt, so wird es wieder von sich aus damit beginnen, ein Kommunikationsnetzwerk aufzuspannen. Dies geschieht wieder dadurch, dass das betreffende Sendeempfangsgerät SEG ein Netzwerkexistenzsignal NES als Rundum-Signal (Broadcast-Signal) aussendet. Empfängt ein benachbartes Sendeempfangsgerät SEG das ausgesendete Netzwerkexistenzsignal NES, so unterlässt es das empfangende Sendeempfangsgerät SEG wieder, selbst ein Netzwerkexistenzsignal NES zu auszusenden. Wenn das das Netzwerkexistenzsignal NES empfangende Sendeempfangsgerät SEG das Netzwerkexistenzsignal NES nur ein einziges Mal empfängt - in diesem Fall ist das Netzwerkexistenzsignal NES sendende Sendeempfangsgerät SEG wieder ein Primär-Sendeempfangsgerät P-SEG, dann besitzt das Primär-Sendeempfangsgerät P-SEG aus der Sicht des empfangenden Sendeempfangsgerätes SEG die erweiterte Funktionalität, also die Master- bzw. Basisstationsfunktionalität, und ist somit das erste Sendeempfangsgerät SEG1, das als Basisstation BS fungiert.

Dieser Fall ist in der FIGUR 4 durch die Sendeempfangsgeräte SEG in der vierten Funkzelle FZ4 und der fünften Funkzelle FZ5 dargestellt. Das Sendeempfangsgerät SEG in der fünften Funkzelle FZ5 "broadcastet" das Netzwerkexistenzsignal NES. Dieses Netzwerkexistenzsignal NES kann gemäß dem Funkversorgungsbereich des Kommunikationsnetzwerkes KNW sowohl von dem Sendeempfangsgerät SEG in der ersten Funkzelle FZ1 als auch von dem Sendeempfangsgerät SEG in der vierten Funkzelle FZ4 empfangen werden. Während das Sendeempfangsgerät SEG in der ersten Funkzelle FZ1 das Netzwerkexistenzsignal NES von mehreren benachbarten Sendeempfangsgeräten SEG empfängt, erhält das Sendeempfangsgerät SEG in der vierten Funkzelle FZ4 das Netzwerkexistenzsignal NES nur ein einziges Mal und zwar von dem Sendeempfangsgerät SEG in der fünften Funkzelle FZ5. Das Sendeempfangsgerät SEG in der fünften Funkzelle FZ5 ist somit aus der Sicht des Sendeempfangsgerätes SEG in der vierten Funkzelle FZ4 das bereits erwähnte Primär-Sendeempfangsgerät P-SEG. Inwieweit dieses Primär-Sendeempfangsgerät P-SEG in der fünften Funkzelle FZ5 nun auch die Master- bzw. Basisstationsfunktionalität besitzt und somit das erste Sendeempfangsgerät SEG1 ist, hängt letztlich davon ab, wie sich das Sendeempfangsgerät SEG in der ersten Funkzelle FZ1, das das von dem Primär-Sendeempfangsgerät P-SEG in der fünften Funkzelle FZ5 gesendete Netzwerkexistenzsignal NES ebenfalls erhalten hat, bezüglich dieses Netzwerkempfangssignal NES verhält.

Wenn ein das Netzwerkexistenzsignal NES empfangende Sendeempfangsgerät SEG, wie das Sendeempfangsgerät SEG in der ersten Funkzelle FZ1, statt von einem Sendeempfangsgerät SEG, dem Primär-Sendeempfangsgerät P-SEG, von mehreren Sendeempfangsgeräten SEG, Sekundär-Sendeempfangsgeräten S-SEG, jeweils ein solches Netzwerkexistenzsignal NES empfängt - gemäß der FIUGR 4 sind dies die Sendeempfangsgeräte SEG in der zweiten Funkzelle FZ2, der dritten Funkzelle FZ3 und der fünften Funkzelle FZ5, so sendet das die verschiedenen Netzwerkexistenzsignale NES empfangende Sendeempfangsgerät SEG in der ersten Funkzelle FZ1 wieder entweder an alle Sekundär-Sendeempfangsgerät S-SEG oder an alle Sekundär-Sendeempfangsgeräte S-SEG mit Ausnahme eines ersten Sekundär-Sendeempfangsgerätes S1-SEG jeweils ein Anweisungssignal AS, mit dem das betreffende Sekundär-Sendeempfangsgerät S-SEG jeweils angewiesen wird, das Aussenden des Netzwerkexistenzsignals NES zu beenden.

Im erstgenannten Fall wäre das die Netzwerkexistenzsignals NES empfangende Sendeempfangsgerät SEG dann das erste Sendeempfangsgerät SEG1, das die Master- bzw. Basisstationsfunktionalität besitzt. Im letztgenannten Fall hingegen wäre das erste Sekundär-Sendeempfangsgerät S1-SEG, das das Anweisungssignal AS nicht erhalten hat, das erste Sendeempfangsgerät SEG1, das die Master- bzw. Basisstationsfunktionalität besitzt.

Gemäß der FIGUR 4 wird das Anweisungssignal AS von dem Sendeempfangsgerät SEG in der ersten Funkzelle FZ1 an die Sendeempfangsgeräte SEG in der zweiten Funkzellen FZ2 und der dritten Funkzelle FZ3 gesendet, während das Sendeempfangsgerät SEG in der fünften Funkzelle FZ5 das Anweisungssignal AS nicht erhält. Damit ist das Sendeempfangsgerät SEG in der fünften Funkzelle FZ5 zugleich Primär-Sendeempfangsgerät P-SEG (aus der Sicht des Sendeempfangsgerätes SEG in der vierten Funkzelle FZ4) und erstes Sekundär-Sendeempfangsgerät S1-SEG (aus der Sicht des Sendeempfangsgerätes SEG in der ersten Funkzelle FZ1) und somit endgültig das erste Sendeempfangsgerät SEG1, das auch gemäß der Zuweisungsprozedur die Master- bzw. Basisstationsfunktionalität besitzt und damit als Basisstation BS fungiert, die zugleich auch den Zugang zum Festnetz FN besitzt.

FIGUREN 5 und 6 zeigen jeweils den Aufbau eines Sendeempfangsgerätes und einer Master- bzw. Basisstation, wie sie in den Kommunikationsnetzwerken KNW der FIGUREN 1 bis 4 zum Einsatz kommen. Die in den FIGUREN 5 und 6 gezeigten Master- bzw. Basisstation und das Sendeempfangsgerät weisen jeweils eine Zentrale Steuereinheit ZST und Sendeempfangsmittel SEM auf, zwischen denen eine erste Physikalische Verbindung PV1 existiert. Darüber hinaus bestehen zur Stromversorgung zwischen der Zentralen Steuereinheit ZST und einer Stromversorgungsschaltung SVGS eine zweite Physikalische Verbindung PV2 und zur aktiven oder inaktiven Anbindung an das Festnetz zwischen der Zentralen Steuereinheit ZST und einer Leitungsanschaltung für das Festnetz LAS eine dritte Physikalische Verbindung PV3, wobei die inaktive Anbindung an das Festnetz durch eine gestrichelt eingezeichnete Leitungsanschaltung LAS zum Ausdruck kommt.

In der Zentralen Steuereinheit ZST sind mit Ausnahme von vorzugsweise als Hardware ausgebildete Speichermitteln SPM und einem in den genannten FIGUREN 5 und 6 nicht dargestellten Mikroprozessor und Mikrocontroller insbesondere z.B. als Software ausgebildete programmierbare Module enthalten, die dem Mikroprozessor und/oder dem Mikrocontroller zugeordnet sind.

Diese Module umfassen neben ersten Auswertemitteln, zweiten Auswertemitteln, ersten Informationserzeugungsmitteln, zweiten Informationserzeugungsmitteln, dritten Informationserzeugungsmitteln, Nachrichtenerzeugungsmitteln und Netzwerkzustandsinformationserzeugungsmitteln insbesondere Prüfmittel PM und Signalerzeugungsmittel SIEM.

Das Sendeempfangsgerät und die Master- bzw. Basisstation in den FIGUREN 5 und 6 sind über eine Luftschnittstelle LSS miteinander verbunden, über die ein Signalverkehr SV abgewickelt wird. Die Luftschnittstelle LSS steht jedoch nicht nur für den Signalverkehr SV zwischen dem Sendeempfangsgerät und der Master- bzw. Basisstation sondern ganz generell auch für den Signalverkehr SV zwischen verschiedenen Sendeempfangsgeräten.

In der FIGUR 5 ist dargestellt, wie das gemäß der FIGUR 3 als dritte Sendeempfangsgerät SEG3 mit der Anbindung an das Festnetz FN ausgebildete, zu der fünften Funkzelle FZ5 korrespondierende Sendeempfangsgerät SEG mit einem weiteren Sendeempfangsgerät SEG das gemäß der FIGUR 3 zu der vierten Funkzelle FZ4 korrespondiert, über die Luftschnittstelle LSS mittels des hierüber abgewickelten Signalverkehrs SV derart kommuniziert, dass das weitere Sendeempfangsgerät SEG, nachdem diese Kommunikation beendet ist, als erstes Sendeempfangsgerät SEG1 die Master- bzw. Basisstationsfunktionalität aus der Sicht des dritten Sendeempfangsgerätes SEG3 besitzt und demzufolge als Master- bzw. Basisstation BS fungiert (Zuweisungsprozedur).

Im Zuge dieser Zuweisungsprozedur, auf die bereits bei der Beschreibung der FIGUR 3 detailliert eingegangen worden ist, wird eine erste Logische Verbindung LV1 zwischen der Zentralen Steuereinheit ZST in dem dritten Sendeempfangsgerät SEG3 und der Zentralen Steuereinheit ZST in dem ersten Sendeempfangsgerät SEG1 hergestellt. Gemäß dieser Verbindung LV1 werden in der Zentralen Steuereinheit ZST des ersten Sendeempfangsgerätes SEG1 von den Signalerzeugungsmitteln SIEM ein Netzwerkexistenzsignal NES erzeugt sowie das Netzwerkexistenzsignal NES über die erste Physikalische Verbindung PV1 den Sendeempfangsmitteln SEM und von dort über die Luftschnittstelle LSS dem dritten Sendeempfangsgerät SEG3 zugeführt und in dem dritten Sendeempfangsgerät SEG3 das zugeführte Netzwerkexistenzsignal NES von den Sendeempfangsmitteln SEM über die erste Physikalische Verbindung PV1 an die Prüfmittel PM in der Zentralen Steuereinheit ZST weitergeleitet.

In dem dritten Sendeempfangsgerät SEG3 sind die Zentrale Steuereinheit ZST mit den Prüfmitteln PM und den Signalerzeugungsmitteln SIEM sowie die Sendeempfangsmittel SEM derart ausgebildet, dass ermittelt wird, ob das Netzwerkexistenzsignal NES empfangen worden ist und somit vorliegt, wobei,
(i) wenn nur von dem ersten Sendeempfangsgerät SEG1 das Netzwerkexistenzsignal NES vorliegt, das erste Sendeempfangsgerät SEG1 ein Primär-Sendeempfangsgerät P-SEG ist, das als Master- bzw. Basisstation BS fungiert und
(ii) wenn kein Netzwerkexistenzsignal NES empfangen worden wäre, das dritte Sendeempfangsgerät SEG3 selber mit dem Aufspannen eines eigenen Netzwerkes begonnen hätte, indem in der Zentralen Steuereinheit ZST des dritten Sendeempfangsgerätes SEG3 von den Signalerzeugungsmitteln SIEM ein Netzwerkexistenzsignal NES erzeugt sowie das Netzwerkexistenzsignal NES über die erste Physikalische Verbindung PV1 den Sendeempfangsmitteln SEM zugeführt und von dort über die Luftschnittstelle LSS ausgesendet worden wäre.

In der FIGUR 6 ist dargestellt, wie das gemäß der FIGUR 4 als dritte Sendeempfangsgerät SEG3 mit der Anbindung an das Festnetz FN ausgebildete, zu der fünften Funkzelle FZ5 korrespondierende Sendeempfangsgerät SEG mit einem weiteren als zweites Sendeempfangsgerät SEG2 bezeichnetes Sendeempfangsgerät SEG, das gemäß der FIGUR 4 zu der ersten Funkzelle FZ1 korrespondiert, über die Luftschnittstelle LSS mittels des hierüber abgewickelten Signalverkehrs SV derart kommuniziert, dass das dritte Sendeempfangsgerät SEG3, nachdem diese Kommunikation beendet ist, zusätzlich als erstes Sendeempfangsgerät SEG1 die Master- bzw. Basisstationsfunktionalität aus der Sicht des zweiten Sendeempfangsgerätes SEG2 besitzt und demzufolge als Master- bzw. Basisstation BS fungiert (Zuweisungsprozedur).

Im Zuge dieser Zuweisungsprozedur, auf die bereits bei der Beschreibung der FIGUR 4 detailliert eingegangen worden ist, wird wieder die erste Logische Verbindung LV1 zwischen der Zentralen Steuereinheit ZST in dem ersten und dritten Sendeempfangsgerät SEG1, SEG3 und der Zentralen Steuereinheit ZST in dem zweiten Sendeempfangsgerät SEG2 hergestellt. Gemäß dieser Verbindung LV1 werden in der Zentralen Steuereinheit ZST des ersten und dritten Sendeempfangsgerätes SEG1, SEG3 von den Signalerzeugungsmitteln SIEM ein Netzwerkexistenzsignal NES erzeugt sowie das Netzwerkexistenzsignal NES über die erste Physikalische Verbindung PV1 den Sendeempfangsmitteln SEM und von dort über die Luftschnittstelle LSS dem zweiten Sendeempfangsgerät SEG2 zugeführt und in dem zweiten Sendeempfangsgerät SEG2 das zugeführte Netzwerkexistenzsignal NES von den Sendeempfangsmitteln SEM über die erste Physikalische Verbindung PV1 an die Prüfmittel PM in der Zentralen Steuereinheit ZST weitergeleitet.

In dem zweiten Sendeempfangsgerät SEG2 sind die Zentrale Steuereinheit ZST mit den Prüfmitteln PM und den Signalerzeugungsmitteln SIEM sowie die Sendeempfangsmittel SEM derart ausgebildet, dass ermittelt wird, ob das Netzwerkexistenzsignal NES empfangen worden ist und somit vorliegt, wobei,
(i) wenn von mehreren als Sekundär-Sendeempfangsgeräte S-SEG bezeichnete Sendeempfangsgeräten SEG das Netzwerkexistenzsignal NES vorliegt, das zweite Sendeempfangsgerät SEG2 den Sekundär-Sendeempfangsgeräten S-SEG mit Ausnahme eines ersten Sekundär-Sendeempfangsgerätes S1-SEG jeweils ein Anweisungssignal AS sendet, mit dem das betreffende Sekundär-Sendeempfangsgerät S-SEG jeweils angewiesen wird, das Aussenden des Netzwerkexistenzsignals NES zu beenden, womit das erste Sekundär-Sendeempfangsgerät S1-SEG die Master- bzw. Basisstation BS ist,
(ii) wenn von mehreren als Sekundär-Sendeempfangsgeräte S-SEG bezeichnete Sendeempfangsgeräten SEG das Netzwerkexistenzsignal NES vorläge, das zweite Sendeempfangsgerät SEG2 aber allen Sekundär-Sendeempfangsgeräten S-SEG jeweils ein Anweisungssignal AS sendete, mit dem das betreffende Sekundär-Sendeempfangsgerät S-SEG jeweils angewiesen würde, das Aussenden des Netzwerkexistenzsignals NES zu beenden, womit das zweite Sendeempfangsgerät SEG2 die Master- bzw. Basisstation BS sein würde und
(iii) wenn kein Netzwerkexistenzsignal NES empfangen worden wäre, das zweite Sendeempfangsgerät SEG2 selber mit dem Aufspannen eines eigenen Netzwerkes begonnen hätte, indem in der Zentralen Steuereinheit ZST des zweiten Sendeempfangsgerätes SEG2 von den Signalerzeugungsmitteln SIEM ein Netzwerkexistenzsignal NES erzeugt sowie das Netzwerkexistenzsignal NES über die erste Physikalische Verbindung PV1 den Sendeempfangsmitteln SEM zugeführt und von dort über die Luftschnittstelle LSS ausgesendet worden wäre.

Gemäß dem vorstehenden Fall (i), der in der FIGUR 20 dargestellt ist, wird eine zweite Logische Verbindung LV2 zwischen der Zentralen Steuereinheit ZST in dem zweiten Sendeempfangsgerät SEG2 und den Sekundär-Sendeempfangsgeräten S-SEG hergestellt. Gemäß dieser Verbindung LV2 werden in der Zentralen Steuereinheit ZST des zweiten Sendeempfangsgerätes SEG2 von den Signalerzeugungsmitteln SIEM das Anweisungssignal AS erzeugt sowie das Anweisungssignal AS über die erste Physikalische Verbindung PV1 den Sendeempfangsmitteln SEM und von dort über die Luftschnittstelle LSS den Sekundär-Sendeempfangsgeräten S-SEG zugeführt.

## Patentansprüche

1. Verfahren zum Aufbau eines drahtlosen selbstorganisierenden Kommunikationsnetzwerkes, bei dem
a) dem Kommunikationsnetzwerk (KNW) mehrere Sendeempfangsgeräte (SEG) zugeordnet werden, die jeweils unmittelbar oder mittelbar, über ein Sendeempfangsgerät (SEG) der Sendeempfangsgeräte (SEG), durch drahtlose Kommunikation miteinander verkehren, wobei
a1) mindestens einem ersten Sendeempfangsgerät (SEG1) eine Basisstationsfunktionalität für den Betrieb als Basisstation (BS) zugewiesen wird,
a2) zweite Sendeempfangsgeräte (SEG2) unmittelbar und/oder mittelbar, über mindestens ein weiteres zweites Sendeempfangsgerät (SEG2), in Kommunikationsreichweite zu dem ersten Sendeempfangsgerät (SEG1, BS) betrieben werden,
b) die Basisstationsfunktionalität dem ersten Sendeempfangsgerät (SEG1, BS) zugewiesen wird, indem
b1) jedes dem Kommunikationsnetzwerk (KNW) zugeordnete Sendeempfangsgerät (SEG) ermittelt, ob die Existenz eines Netzwerkes anzeigende Netzwerkexistenzsignale (NES) von in Kommunikationsreichweite befindlichen weiteren Sendeempfangsgeräten (SEG) empfangen werden,
**dadurch gekennzeichnet, dass**
die Zuweisung der Basisstationsfunktionalität durch die Ermittlung des Empfangs von Netzwerkexistenzsignalen in der Weise erfolgt, dass
b11) wenn das jeweilige ermittelnde Sendeempfangsgerät (SEG) nur von einem Primär-Sendeempfangsgerät (P-SEG) der weiteren Sendeempfangsgeräte (SEG) ein Netzwerkexistenzsignal (NES) empfängt, das Primär-Sendeempfangsgerät (P-SEG) die Basisstationsfunktionalität besitzt und somit das erste Sendeempfangsgerät (SEG1, BS) ist,
b12) wenn das jeweilige ermittelnde Sendeempfangsgerät (SEG) von mehreren Sekundär-Sendeempfangsgeräten (S-SEG) der weiteren Sendeempfangsgeräte (SEG) jeweils ein Netzwerkexistenzsignal (NES) empfängt, das ermittelnde Sendeempfangsgerät (SEG) den Sekundär-Sendeempfangsgeräten (S-SEG) i) mit Ausnahme eines ersten Sekundär-Sendeempfangsgerätes (S1-SEG) oder ii) allen Sekundär-Sendeempfangsgeräten (S-SEG) jeweils ein Anweisungssignal (AS) sendet, mit dem das betreffende Sekundär-Sendeempfangsgerät (S-SEG) jeweils angewiesen wird, das Aussenden des Netzwerkexistenzsignals (NES) zu beenden, womit i) das erste Sekundär-Sendeempfangsgerät (S1-SEG) beziehungsweise ii) das ermittelnde Sendeempfangsgerät (SEG) die Basisstationsfunktionalität besitzt und das erste Sendeempfangsgerät (SEG1, BS) ist und womit das Sekundär-Sendeempfangsgerät (S-SEG) das zweite Sendeempfangsgerät (SEG2) ist,
b13) wenn das jeweilige ermittelnde Sendeempfangsgerät (SEG) kein Netzwerkexistenzsignal (NES) von den weiteren Sendeempfangsgeräten (SEG) empfängt, das ermittelnde Sendeempfangsgerät (SEG) mit dem Aufspannen eines eigenen Netzwerkes beginnt, indem es das Netzwerkexistenzsignal (NES) aussendet, womit das ermittelnde Sendeempfangsgerät (SEG) entweder das Primär-Sendeempfangsgerät (P-SEG) oder das erste Sekundär-Sendeempfangsgerät (S1-SEG) oder das das Anweisungssignal (AS) erhaltende Sekundär-Sendeempfangsgerät (S-SEG) ist.

2. Verfahren nach Anspruch 1, **dadurch gekennzeichnet, dass**
das erste Sekundär-Sendeempfangsgerät (S1-SEG) das Netzwerkexistenzsignal (NES) als erstes sendet.

3. Verfahren nach Anspruch 1, **dadurch gekennzeichnet, dass**
die Sendeempfangsgeräte (SEG) jeweils als stationäre und/oder mobile Geräte betrieben werden.

4. Verfahren nach Anspruch 1, **dadurch gekennzeichnet, dass**
das Kommunikationsnetzwerk (KNW) als "Wireless Local Area Network" oder als DECT-Schnurlostelefonsystem betrieben wird.

5. Drahtloses selbstorganisierendes Kommunikationsnetzwerk, mit
a) mehreren Sendeempfangsgeräten (SEG), die jeweils unmittelbar oder mittelbar, über ein Sendeempfangsgerät (SEG) der Sendeempfangsgeräte (SEG), durch drahtlose Kommunikation miteinander verbunden sind,
b) mindestens einem ersten Sendeempfangsgerät (SEG1) der Sendeempfangsgeräte (SEG), das durch Zuweisung einer Basisstationsfunktionalität als Basisstation (BS) ausgebildet ist,
c) zweiten Sendeempfangsgeräten (SEG2) der Sendeempfangsgeräte (SEG), die unmittelbar und/oder mittelbar, über mindestens ein weiteres zweites Sendeempfangsgerät (SEG2), in Kommunikationsreichweite zu dem ersten Sendeempfangsgerät (SEG1, BS) angeordnet sind,
d) für die Zuweisung der Basisstationsfunktionalität die dem Kommunikationsnetzwerk (KNW) zugeordneten Sendeempfangsgeräte (SEG) derart ausgebildet sind, dass jeweils ermittelt wird, ob die Existenz des Netzwerkes anzeigende Netzwerkexistenzsignale (NES) von in Kommunikationsreichweite befindlichen weiteren Sendeempfangsgeräten (SEG) empfangen werden,
**dadurch gekennzeichnet, dass**
die Zuweisung der Basisstationsfunktionalität durch die Ermittlung des Empfangs von Netzwerkexistenzsignalen derart ausgestaltet ist, dass
d1) wenn das jeweilige ermittelnde Sendeempfangsgerät (SEG) nur von einem-Primär-Sendeempfangsgerät (P-SEG) der weiteren Sendeempfangsgeräte (SEG) ein Netzwerkexistenzsignal (NES) empfängt, das Primär-Sendeempfangsgerät (P-SEG) die Basisstationsfunktionalität besitzt und somit das erste Sendeempfangsgerät (SEG1, BS) ist,
d2) wenn das jeweilige ermittelnde Sendeempfangsgerät (SEG) von mehreren Sekundär-Sendeempfangsgeräten (S-SEG) der weiteren Sendeempfangsgeräte (SEG) jeweils ein Netzwerkexistenzsignal (NES) empfängt, das ermittelnde Sendeempfangsgerät (SEG) den Sekundär-Sendeempfangsgeräten (S-SEG) i) mit Ausnahme eines ersten Sekundär-Sendeempfangsgerätes (S1-SEG) oder ii) allen Sekundär-Sendeempfangsgeräten (S-SEG) jeweils ein Anweisungssignal (AS) sendet, mit dem das betreffende Sekundär-Sendeempfangsgerät (S-SEG) jeweils angewiesen wird, das Aussenden des Netzwerkexistenzsignals (NES) zu beenden, womit i) das erste Sekundär-Sendeempfangsgerät (S1-SEG) beziehungsweise ii) das ermittelnde Sendeempfangsgerät (SEG) die Basisstationsfunktionalität besitzt und das erste Sendeempfangsgerät (SEG1, BS) ist und womit das Sekundär-Sendeempfangsgerät (S-SEG) das zweite Sendeempfangsgerät (SEG2) ist,
d3) wenn das jeweilige ermittelnde Sendeempfangsgerät (SEG) kein Netzwerkexistenzsignal (NES) von den weiteren Sendeempfangsgeräten (SEG) empfängt, das ermittelnde Sendeempfangsgerät (SEG) mit dem Aufspannen eines eigenen Netzwerkes beginnt, indem es das Netzwerkexistenzsignal (NES) aussendet, womit das ermittelnde Sendeempfangsgerät (SEG) entweder das Primär-Sendeempfangsgerät (P-SEG) oder das erste Sekundär-Sendeempfangsgerät (S1-SEG) oder das das Anweisungssignal (AS) erhaltende Sekundär-Sendeempfangsgerät (S-SEG) ist.

6. Kommunikat ionsnet zwerk nach Anspruch 5, **dadurch gekennzeichnet, dass**
das erste Sekundär-Sendeempfangsgerät (S1-SEG) derart ausgebildet ist, dass es das Netzwerkexistenzsignal (NES) als erstes sendet.

7. Kommunikationsnetzwerk nach Anspruch 5, **dadurch gekennzeichnet, dass**
die Sendeempfangsgeräte (SEG) jeweils stationäre und/oder mobile Geräte sind.

8. Kommunikationsnetzwerk nach Anspruch 5, **dadurch gekennzeichnet, dass**
das Kommunikationsnetzwerk (KNW) als "Wireless Local Area Network" oder als DECT-Schnurlostelefonsystem ausgebildet ist.

9. Sendeempfangsgerät eines drahtlosen selbstorganisierenden Kommunikationsnetzwerkes, das
a) eine Zentrale Steuereinheit (ZST) zur Steuerung der Bedienungs- und Funktionsabläufe in dem Sendeempfangsgerät (SEG) und Sendeempfangsmittel (SEM) aufweist, die miteinander verbunden und derart ausgebildet sind, dass das Sendeempfangsgerät (SEG) mit mindestens einem weiteren Sendeempfangsgerät (SEG) des Kommunikationsnetzwerkes (KNW) unmittelbar oder mittelbar, über ein weiteres Sendeempfangsgerät (SEG), durch drahtlose Kommunikation verkehrt,
b) Prüfmittel (PM) und Signalerzeugungsmittel (SIEM) vorhanden sind, die der Zentralen Steuereinheit (ZST) zugeordnet sind und wobei die Zentrale Steuereinheit (ZST) mit den Prüfmitteln (PM) und Signalerzeugungsmitteln (SIEM) sowie die Sendeempfangsmittel (SEM) derart ausgebildet sind, dass
b1) jeweils ermittelt wird, ob ein die Existenz des Netzwerkes anzeigendes Netzwerkexistenzsignal (NES) empfangen wird,
**dadurch gekennzeichnet, dass**
die Ermittlung des Empfangs von Netzwerkexistenzsignalen derart ausgestaltet ist, dass
b11) wenn ein Netzwerkexistenzsignal (NES) nur von einem Primär-Sendeempfangsgerät (P-SEG) des weiteren Sendeempfangsgerätes (SEG) bzw. der weiteren Sendeempfangsgeräte (SEG) empfangen wird, das Primär-Sendeempfangsgerät (P-SEG) eine Basisstation (BS) ist,
b12) wenn ein Netzwerkexistenzsignal (NES) jeweils von mehreren Sekundär-Sendeempfangsgeräten (S-SEG) des weiteren Sendeempfangsgerätes (SEG) bzw. der weiteren Sendeempfangsgeräte (SEG) empfangen wird, das Sendeempfangsgerät (SEG) den Sekundär-Sendeempfangsgeräten (S-SEG) i) mit Ausnahme eines ersten Sekundär-Sendeempfangsgerätes (S1-SEG) oder ii) allen Sekundär-Sendeempfangsgeräten (S-SEG) jeweils ein Anweisungssignal (AS) sendet, mit dem das betreffende Sekundär-Sendeempfangsgerät (S-SEG) jeweils angewiesen wird, das Aussenden des Netzwerkexistenzsignals (NES) zu beenden, womit i) das erste Sekundär-Sendeempfangsgerät (S1-SEG) eine Basisstation (BS) ist beziehungsweise ii) das Sendeempfangsgerät (SEG) eine Basisstation (BS) ist,
b13) wenn kein Netzwerkexistenzsignal (NES) empfangen wird, das Sendeempfangsgerät (SEG) mit dem Aufspannen eines eigenen Netzwerkes beginnt, indem es das Netzwerkexistenzsignal (NES) aussendet, womit das Sendeempfangsgerät (SEG) entweder das Primär-Sendeempfangsgerät (P-SEG) oder das erste Sekundär-Sendeempfangsgerät (S1-SEG) oder das das Anweisungssignal (AS) erhaltende Sekundär-Sendeempfangsgerät (S-SEG) ist.

10. Sendeempfangsgerät nach Anspruch 9, **dadurch gekennzeichnet, dass**
das Netzwerkexistenzsignal (NES) von dem ersten Sekundär-Sendeempfangsgerät (S1-SEG) als erstes aussendbar ist.

11. Sendeempfangsgerät nach Anspruch 9, **dadurch gekennzeichnet, dass** es ein stationäres und/oder mobiles Gerät ist.

12. Sendeempfangsgerät nach Anspruch 9, **dadurch gekennzeichnet, dass**
das Kommunikationsnetzwerk (KNW) als "Wireless Local Area Network" oder als DECT-Schnurlostelefonsystem ausgebildet ist.

## Claims

1. Method for the establishment of a wireless autonomous communications network, in which
a) a number of transmitting/receiving devices (SEG) which in each case communicate with one another by wireless communication directly or indirectly via a transmitting/receiving device (SEG) of the transmitting/receiving devices (SEG) are allocated to the communications network (KNW), wherein
a1) a base station functionality for the operation as base station (BS) is assigned to at least one first transmitting/receiving device (SEG1),
a2) second transmitting/receiving devices (SEG2) are operated directly and/or indirectly via at least one further second transmitting/receiving device (SEG2) within communication range of the first transmitting/receiving device (SEG1, BS),
b) the base station functionality is assigned to the first transmitting/receiving device (SEG1, BS) in that
b1) each transmitting/receiving device (SEG) allocated to the communications network (KNW) determines whether network existence signals (NES) indicating the existence of a network are received by further transmitting/receiving devices (SEG) located within communication range,
**characterized in that**
the assignment of the base station functionality by the determination of the reception of network existence signals takes place in such a manner that
b11) if the respective determining transmitting/receiving device (SEG) receives a network existence signal (NES) from only one primary transmitting/receiving device (P-SEG) of the further transmitting/receiving devices (SEG), the primary transmitting/receiving device (P-SEG) has the base station functionality and is thus the first transmitting/receiving device (SEG1, BS),
b12) if the respective determining transmitting/receiving device (SEG) receives a network existence signal (NES) in each case from a number of secondary transmitting/receiving devices (S-SEG) of the further transmitting/receiving devices (SEG), the determining transmitting/receiving device (SEG) in each case sends to the secondary transmitting/receiving devices (S-SEG) i) with the exception of a first secondary transmitting/receiving device (S1-SEG) or ii) to all secondary transmitting/receiving devices (S-SEG) an instruction signal (AS) by means of which the relevant secondary transmitting/receiving device (S-SEG) is in each case instructed to end the sending-out of the network existence signal (NES) by means of which i) the first secondary transmitting/receiving device (S1-SEG) or, respectively, ii) the determining transmitting/receiving device (SEG) has the base station functionality and is the first transmitting/receiving device (SEG1, BS) and by means of which the secondary transmitting/receiving device (S-SEG) is the second transmitting/receiving device (SEG2),
b13) if the respective determining transmitting/receiving device (SEG) does not receive a network existence signal (NES) from the further transmitting/receiving devices (SEG), the determining transmitting/receiving device (SEG) begins to open its own network by sending out the network existence signal (NES), by means of which the determining transmitting/receiving device (SEG) is either the primary transmitting/receiving device (P-SEG) or the first secondary transmitting/receiving device (S1-SEG) or the secondary transmitting/receiving device (S-SEG) receiving the instruction signal (AS).

2. Method according to Claim 1, **characterized in that** the first secondary transmitting/receiving device (S1-SEG) sends the network existence signal (NES) as the first one.

3. Method according to Claim 1, **characterized in that** the transmitting/receiving devices (SEG) are in each case operated as stationary and/or mobile devices.

4. Method according to Claim 1, **characterized in that** the communications network (KNW) is operated as wireless local area network or as DECT cordless telephone system.

5. Wireless autonomous communication network comprising
a) a number of transmitting/receiving devices (SEG) which are in each case connected to one another by wireless communication directly or indirectly via a transmitting/receiving device (SEG) of the transmitting/receiving devices (SEG),
b) at least one first transmitting/receiving device (SEG1) of the transmitting/receiving devices (SEG) which is arranged as base station (BS) by being assigned a base station functionality,
c) second transmitting/receiving devices (SEG2) of the transmitting/receiving devices (SEG) which are arranged within communication range of the first transmitting/receiving device (SEG1, BS) directly and/or indirectly via at least one further second transmitting/receiving device (SEG2),
d) for the assignment of the base station functionality, the transmitting/receiving devices (SEG) allocated to the communication network (KNW) are arranged in such a manner that it is in each case determined whether network existence signals (NES) indicating the existence of the network are received by further transmitting/receiving devices (SEG) located within communication range,
**characterized in that**
the assignment of the base station functionality by determining the reception of network existence signals is arranged in such a manner that
d1) if the respective determining transmitting/receiving device (SEG) receives a network existence signal (NES) only from one primary transmitting/receiving device (P-SEG) of the further transmitting/receiving devices (SEG), the primary transmitting/receiving device (P-SEG) has the base station functionality and is thus the first transmitting/receiving device (SEG1, BS),
d2) if the respective determining transmitting/receiving device (SEG) in each case receives a network existence signal (NES) from a number of secondary transmitting/receiving devices (S-SEG) of the further transmitting/receiving devices (SEG), the determining transmitting/receiving device (SEG) in each case sends to the secondary transmitting/receiving devices (S-SEG) i) with the exception of a first secondary transmitting/receiving device (S1-SEG) or ii) to all secondary transmitting/receiving devices (S-SEG) an instruction signal (AS) by means of which the relevant secondary transmitting/receiving device (S-SEG) is in each case instructed to end the sending out of the network existence signal (NES) by means of which i) the first secondary transmitting/receiving device (S1-SEG) or, respectively, ii) the determining transmitting/receiving device (SEG) has the base station functionality and is the first transmitting/receiving device (SEG1, BS) and by means of which the secondary transmitting/receiving device (S-SEG) is the second transmitting/receiving device (SEG2),
d3) if the respective determining transmitting/receiving device (SEG) does not receive a network existence signal (NES) from the further transmitting/receiving devices (SEG), the determining transmitting/receiving device (SEG) begins to open its own network by sending out the network existence signal (NES), by means of which the determining transmitting/receiving device (SEG) is either the primary transmitting/receiving device (P-SEG) or the first secondary transmitting/receiving device (S1-SEG) or the secondary transmitting/receiving device (S-SEG) receiving the instruction signal (AS).

6. Communications network according to Claim 5,
**characterized in that** the first secondary transmitting/receiving device (S1-SEG) is arranged in such a manner that it sends the network existence signal (NES) as the first one.

7. Communications network according to Claim 5,
**characterized in that** the transmitting/receiving devices (SEG) are in each case stationary and/or mobile devices.

8. Communications network according to Claim 5,
**characterized in that** the communications network (KNW) is arranged as wireless local area network or as DECT cordless telephone system.

9. Transmitting/receiving device of a wireless autonomous communications network, which
a) has a central control unit (ZST) for controlling the operational and functional sequences in the transmitting/receiving device (SEG) and transmitting/receiving means (SEM) which are connected to one another and are arranged in such a manner that the transmitting/receiving device (SEG) communicates by wireless communication with at least one further transmitting/receiving device (SEG) of the communications network (KNW) directly or indirectly via a further transmitting/receiving device (SEG),
b) testing means (PM) and signal generating means (SIEM) are present which are allocated to the central control unit (ZST) and wherein the central control unit (ZST) with the testing means (PM) and signal generating means (SIEM) and the transmitting/receiving means (SEM) are constructed in such a manner that
b1) it is determined in each case whether a network existence signal (NES) indicating the existence of the network is received, **characterized in that** the determination of the reception of network existence signals is arranged in such a manner that
b11) if a network existence signal (NES) is received only by one primary transmitting/receiving device (P-SEG) of the further transmitting/receiving device (SEG) or of the further transmitting/receiving devices (SEG), respectively, the primary transmitting/receiving device (P-SEG) is a base station (BS),
b12) if a network existence signal (NES) is received in each case by a number of secondary transmitting/receiving devices (S-SEG) of the further transmitting/receiving device (SEG) or of the further transmitting/receiving devices (SEG), respectively, the transmitting/receiving device (SEG) in each case sends to the secondary transmitting/receiving devices (S-SEG) i) with the exception of a first secondary transmitting/receiving device (S1-SEG) or ii) to all secondary transmitting/receiving devices (S-SEG) an instruction signal (AS) by means of which the relevant secondary transmitting/receiving device (S-SEG) is in each case instructed to end the sending out of the network existence signal (NES), by means of which i) the first secondary transmitting/receiving device (S1-SEG) is a base station (BS) or, respectively, ii) the transmitting/receiving device (SEG) is a base station (BS),
b13) if no network existence signal (NES) is received, the transmitting/receiving device (SEG) begins to open its own network by sending out the network existence signal (NES), by means of which the transmitting/receiving device (SEG) is either the primary transmitting/receiving device (P-SEG) or the first secondary transmitting/receiving device (S1-SEG) or the secondary transmitting/receiving device (S-SEG) receiving the instruction signal (AS).

10. Transmitting/receiving device according to Claim 9, **characterized in that** the network existence signal (NES) can be sent out by the first secondary transmitting/receiving device (S1-SEG) as the first one.

11. Transmitting/receiving device according to Claim 9, **characterized in that** it is a stationary and/or mobile device.

12. Transmitting/receiving device according to Claim 9, **characterized in that** the communications network (KNW) is constructed as wireless local area network or as DECT cordless telephone system.

## Revendications

1. Procédé d'établissement d'un réseau de communication auto-organisé sans fil, selon lequel
a) on associe au réseau de communication (KNW) plusieurs appareils d'émission et de réception (SEG) qui communiquent entre eux par une communication sans fil à chaque fois directement ou indirectement, par l'intermédiaire d'un appareil d'émission et de réception (SEG) parmi les appareils d'émission et de réception (SEG),
a1) une fonctionnalité de station de base étant attribuée à au moins un premier appareil d'émission et de réception (SEG1) pour qu'il fonctionne comme station de base (BS),
a2) des deuxièmes appareils d'émission et de réception (SEG2) fonctionnant dans la zone de couverture de communication du premier appareil d'émission et de réception (SEG1, BS) directement et/ou indirectement, par l'intermédiaire d'au moins un autre deuxième appareil d'émission et de réception (SEG2),
b) on attribue la fonctionnalité de station de base au premier appareil d'émission et de réception (SEG1, BS) en faisant en sorte que
b1) chaque appareil d'émission et de réception (SEG) associé au réseau de communication (KNW) détermine si des signaux d'existence de réseau (NES) indiquant l'existence d'un réseau sont reçus par d'autres appareils d'émission et de réception (SEG) se trouvant dans la zone de couverture de communication,
**caractérisé en ce que** l'attribution de la fonctionnalité de station de base s'effectue via la détermination de la réception de signaux d'existence de réseau de telle sorte que
b11) si l'appareil d'émission et de réception déterminant respectif (SEG) reçoit un signal d'existence de réseau (NES) seulement d'un appareil d'émission et de réception primaire (P-SEG) des autres appareils d'émission et de réception (SEG), l'appareil d'émission et de réception primaire (P-SEG) a la fonctionnalité de station de base et est donc le premier appareil d'émission et de réception (SEG1, BS),
b12) si l'appareil d'émission et de réception déterminant respectif (SEG) reçoit à chaque fois un signal d'existence de réseau (NES) de plusieurs appareils d'émission et de réception secondaires (S-SEG) des autres appareils d'émission et de réception (SEG), l'appareil d'émission et de réception déterminant (SEG) envoie aux appareils d'émission et de réception secondaires (S-SEG) i) à l'exception d'un premier appareil d'émission et de réception secondaire (S1-SEG) ou ii) à tous les appareils d'émission et de réception secondaires (S-SEG) à chaque fois un signal de commande (AS) avec lequel l'appareil d'émission et de réception secondaire concerné (S-SEG) est commandé de manière à mettre fin à l'émission du signal d'existence de réseau (NES), moyennant quoi i) le premier appareil d'émission et de réception secondaire (S1-SEG) ou ii) l'appareil d'émission et de réception déterminant (SEG) a la fonctionnalité de station de base et est le premier appareil d'émission et de réception (SEG1, BS) et moyennant quoi l'appareil d'émission et de réception secondaire (S-SEG) est le deuxième appareil d'émission et de réception (SEG2),
b13) si l'appareil d'émission et de réception déterminant respectif (SEG) ne reçoit pas de signal d'existence de réseau (NES) des autres appareils d'émission et de réception (SEG), l'appareil d'émission et de réception déterminant (SEG) commence à développer un réseau particulier en émettant le signal d'existence de réseau (NES), moyennant quoi l'appareil d'émission et de réception déterminant (SEG) est soit l'appareil d'émission et de réception primaire (P-SEG) soit le premier appareil d'émission et de réception secondaire (S1-SEG) soit l'appareil d'émission et de réception secondaire (S-SEG) recevant le signal de commande (AS).

2. Procédé selon la revendication 1, **caractérisé en ce que** le premier appareil d'émission et de réception secondaire (S1-SEG) est le premier à envoyer le signal d'existence de réseau (NES).

3. Procédé selon la revendication 1, **caractérisé en ce que** les appareils d'émission et de réception (SEG) fonctionnent à chaque fois comme appareils fixes et/ou mobiles.

4. Procédé selon la revendication 1, **caractérisé en ce que** le réseau de communication (KNW) fonctionne comme un « Wireless Local Area Network » ou comme un système téléphonique sans cordon DECT.

5. Réseau de communication auto-organisé sans fil, avec
a) plusieurs appareils d'émission et de réception (SEG) qui sont reliés entre eux par une communication sans fil à chaque fois directement ou indirectement, par l'intermédiaire d'un appareil d'émission et de réception (SEG) parmi les appareils d'émission et de réception (SEG),
b) au moins un premier appareil d'émission et de réception (SEG1) parmi les appareils d'émission et de réception (SEG) qui est conçu comme station de base (BS) par l'attribution d'une fonctionnalité de station de base,
c) des deuxièmes appareils d'émission et de réception (SEG2) parmi les appareils d'émission et de réception (SEG) qui sont placés dans la zone de couverture de communication du premier appareil d'émission et de réception (SEG1, BS) directement ou indirectement, par l'intermédiaire d'au moins un autre deuxième appareil d'émission et de réception (SEG2),
d) pour l'attribution de la fonctionnalité de station de base, les appareils d'émission et de réception (SEG) associés au réseau de communication (KNW) sont conçus de telle sorte que l'on détermine à chaque fois si des signaux d'existence de réseau (NES) indiquant l'existence du réseau sont reçus par d'autres appareils d'émission et de réception (SEG) se trouvant dans la zone de couverture de communication,
**caractérisé en ce que** l'attribution de la fonctionnalité de station de base via la détermination de la réception de signaux d'existence de réseau est conçue de telle sorte que
d1) si l'appareil d'émission et de réception déterminant respectif (SEG) reçoit un signal d'existence de réseau (NES) seulement d'un appareil d'émission et de réception primaire (P-SEG) des autres appareils d'émission et de réception (SEG), l'appareil d'émission et de réception primaire (P-SEG) a la fonctionnalité de station de base et est donc le premier appareil d'émission et de réception (SEG1, BS),
d2) si l'appareil d'émission et de réception déterminant respectif (SEG) reçoit à chaque fois un signal d'existence de réseau (NES) de plusieurs appareils d'émission et de réception secondaires (S-SEG) des autres appareils d'émission et de réception (SEG), l'appareil d'émission et de réception déterminant (SEG) envoie aux appareils d'émission et de réception secondaires (S-SEG) i) à l'exception d'un premier appareil d'émission et de réception secondaire (S1-SEG) ou ii) à tous les appareils d'émission et de réception secondaires (S-SEG) à chaque fois un signal de commande (AS) avec lequel l'appareil d'émission et de réception secondaire concerné (S-SEG) est commandé de manière à mettre fin à l'émission du signal d'existence de réseau (NES), moyennant quoi i) le premier appareil d'émission et de réception secondaire (S1-SEG) ou ii) l'appareil d'émission et de réception déterminant (SEG) a la fonctionnalité de station de base et est le premier appareil d'émission et de réception (SEG1, BS) et moyennant quoi l'appareil d'émission et de réception secondaire (S-SEG) est le deuxième appareil d'émission et de réception (SEG2),
d3) si l'appareil d'émission et de réception déterminant respectif (SEG) ne reçoit pas de signal d'existence de réseau (NES) des autres appareils d'émission et de réception (SEG), l'appareil d'émission et de réception déterminant (SEG) commence à développer un réseau particulier en émettant le signal d'existence de réseau (NES), moyennant quoi l'appareil d'émission et de réception déterminant (SEG) est soit l'appareil d'émission et de réception primaire (P-SEG) soit le premier appareil d'émission et de réception secondaire (S1-SEG) soit l'appareil d'émission et de réception secondaire (S-SEG) recevant le signal de commande (AS).

6. Réseau de communication selon la revendication 5, **caractérisé en ce que** le premier appareil d'émission et de réception secondaire (S1-SEG) est conçu de telle sorte qu'il est le premier à envoyer le signal d'existence de réseau (NES).

7. Réseau de communication selon la revendication 5, **caractérisé en ce que** les appareils d'émission et de réception (SEG) fonctionnent à chaque fois comme appareils fixes et/ou mobiles.

8. Réseau de communication selon la revendication 5, **caractérisé en ce que** le réseau de communication (KNW) est conçu comme un « Wireless Local Area Network » ou comme un système téléphonique sans cordon DECT.

9. Appareil d'émission et de réception d'un réseau de communication auto-organisé sans fil, qui
a) comporte une unité de commande centrale (ZST) pour commander les opérations de contrôle et de fonctionnement dans l'appareil d'émission et de réception (SEG) et des moyens d'émission et de réception (SEM) qui sont reliés entre eux et qui sont conçus de telle sorte que l'appareil d'émission et de réception (SEG) communique par une communication sans fil avec au moins un autre appareil d'émission et de réception (SEG) du réseau de communication (KNW) directement ou indirectement, par l'intermédiaire d'un autre appareil d'émission et de réception (SEG),
b) comporte des moyens de vérification (PM) et des moyens de production de signal (SIEM) qui sont associés à l'unité de commande centrale (ZST), l'unité de commande centrale (ZST) avec les moyens de vérification (PM) et avec les moyens de production de signal (SIEM) ainsi que les moyens d'émission et de réception (SEM) étant conçus de telle sorte que
b1) on détermine à chaque fois si un signal d'existence de réseau (NES) indiquant l'existence du réseau est reçu,
**caractérisé en ce que** la détermination de la réception de signaux d'existence de réseau est conçue de telle sorte que
b11) si un signal d'existence de réseau (NES) est reçu seulement d'un appareil d'émission et de réception primaire (P-SEG) de l'autre appareil d'émission et de réception (SEG) ou des autres appareils d'émission et de réception (SEG), l'appareil d'émission et de réception primaire (P-SEG) est une station de base (BS),
b12) si un signal d'existence de réseau (NES) est reçu à chaque fois de plusieurs appareils d'émission et de réception secondaires (S-SEG) de l'autre appareil d'émission et de réception (SEG) ou des autres appareils d'émission et de réception (SEG), l'appareil d'émission et de réception (SEG) envoie aux appareils d'émission et de réception secondaires (S-SEG) i) à l'exception d'un premier appareil d'émission et de réception secondaire (S1-SEG) ou ii) à tous les appareils d'émission et de réception secondaires (S-SEG) à chaque fois un signal de commande (AS) avec lequel l'appareil d'émission et de réception secondaire concerné (S-SEG) est commandé de manière à mettre fin à l'émission du signal d'existence de réseau (NES), moyennant quoi i) le premier appareil d'émission et de réception secondaire (S1-SEG) est une station de base (BS) ou ii) l'appareil d'émission et de réception (SEG) est une station de base (BS),
b13) si aucun signal d'existence de réseau (NES) n'est reçu, l'appareil d'émission et de réception (SEG) commence à développer un réseau particulier en émettant le signal d'existence de réseau (NES), moyennant quoi l'appareil d'émission et de réception (SEG) est soit l'appareil d'émission et de réception primaire (P-SEG) soit le premier appareil d'émission et de réception secondaire (S1-SEG) soit l'appareil d'émission et de réception secondaire (S-SEG) recevant le signal de commande (AS).

10. Appareil d'émission et de réception selon la revendication 9, **caractérisé en ce que** le signal d'existence de réseau (NES) peut être envoyé en premier par le premier appareil d'émission et de réception secondaire (S1-SEG).

11. Appareil d'émission et de réception selon la revendication 9, **caractérisé en ce qu'**il s'agit d'un appareil fixe et/ou mobile.

12. Appareil d'émission et de réception selon la revendication 9, **caractérisé en ce que** le réseau de communication (KNW) est conçu comme un « Wireless Local Area Network » ou comme un système téléphonique sans cordon DECT.
